# EUROPEAN PATENT APPLICATION

(11) **EP 4 075 837 A1**
(43) Date of publication of application: **19.10.2022**
(21) Application number: 19958282.6
(22) Date of filing: 30.12.2019
(51) Int. Cl.: H04W 8/18

(54) **ONLINE SUBSCRIPTION METHOD AND APPARATUS**

(71) Applicant: Huawei Technologies Co., Ltd., Shenzhen, Guangdong 518129, (CN)
(72) Inventor: ZHU, Hualin, Shenzhen, Guangdong 518129 (CN); LI, Huan, Shenzhen, Guangdong 518129 (CN)
(74) Representative: Gill Jennings & Every LLP
(86) International application number: PCT/CN2019/130204
(87) International publication number: WO 2021/134364

(57) **Abstract**

An online signup method and an apparatus are provided. The method includes: A first core network element may identify that a terminal device needs to perform online signup, trigger online signup authentication of the terminal device, and send a first message to a second core network element when the online signup authentication of the terminal device succeeds, to request the second core network element to generate or update a network subscription of the terminal device. According to the foregoing technical solutions, a network can generate or update the network subscription for the terminal device in time.

## Description

### TECHNICAL FIELD

This application relates to the field of wireless communication technologies, and in particular, to an online signup method and an apparatus.

### BACKGROUND

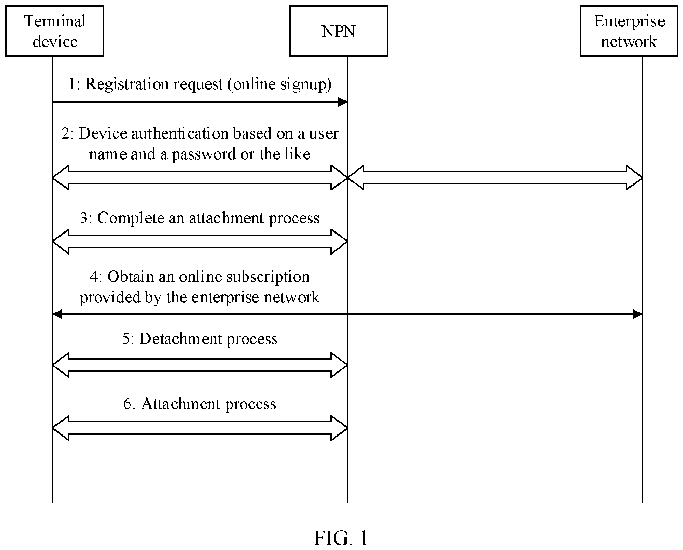

Online signup is a manner in which a network does not configure a subscription of a terminal device in advance, but configures the subscription for the terminal device when the terminal device registers with the network. FIG. 1 is a schematic diagram of an existing online signup solution. As shown in FIG. 1, a terminal device sends, to a non-public network (non-public network, NPN), an attach request used only for online signup, and then performs mutual authentication with an enterprise network through the NPN. After the authentication succeeds, the terminal device and the NPN continue to complete an attachment process. After the attachment process ends, the terminal device establishes a user plane connection to the enterprise network, to obtain a subscription generated online by the enterprise network. After obtaining the subscription generated online, the terminal device performs a detachment process, and then performs reattachment to obtain a normal service.

It can be learned that in the existing online signup solution, only the enterprise network generates the subscription online for the terminal device, but a subscription stored in the NPN is not updated as an online signup process is completed. Consequently, the subscription that is configured for the terminal device by default in the NPN is no longer usable to the terminal device that completes the online signup.

### SUMMARY

Embodiments of this application provide an online signup method and an apparatus, to generate a network subscription online for a terminal device.

According to a first aspect, an embodiment of this application provides an online signup method. The method may be performed by a first core network element, for example, an AMF or an SMF, and the method includes: The first core network element identifies that a terminal device needs to perform online signup. The first core network element triggers online signup authentication of the terminal device. If the online signup authentication of the terminal device succeeds, the first core network element sends a first message to a second core network element, where the first message includes a first identifier of the terminal device, and is used to request the second core network element to generate or update a network subscription of the terminal device.

According to the foregoing technical solution, the first core network element may identify that the terminal device needs to perform online signup, trigger the online signup authentication of the terminal device, and send the first message to the second core network element after the online signup authentication of the terminal device succeeds, to request the second core network element to generate or update the network subscription of the terminal device, so that a network can generate or update the network subscription for the terminal device in time.

With reference to the first aspect, in a possible design of the first aspect, that the first core network element identifies that a terminal device needs to perform online signup may be: The first core network element receives a second message from the terminal device or an access network device, where the second message includes a user group identifier or a network identifier. If determining that the terminal device does not belong to a user group corresponding to the user group identifier, or does not belong to a user group corresponding to the network identifier, the first core network element identifies that the terminal device needs to perform online signup.

With reference to the first aspect, in a possible design of the first aspect, that the first core network element identifies that a terminal device needs to perform online signup may alternatively be: The first core network element receives a second message from the terminal device or an access network device, where the second message includes an online signup indication. The first core network element identifies, based on the online signup indication, that the terminal device needs to perform online signup.

According to the foregoing technical solution, the first core network element may identify, in a plurality of possible manners, that the terminal device needs to perform online signup. In this way, applicability of the online signup method can be effectively improved.

With reference to the first aspect, in a possible design of the first aspect, the online signup authentication is a process of performing authentication on identity information provided by the terminal device. That the first core network element triggers online signup authentication of the terminal device includes: The first core network element sends an authentication message to an authentication server function network element, to trigger the authentication server function network element to perform online signup authentication on the terminal device. Alternatively, the first core network element sends an authentication message to an online signup authentication device, to trigger the online signup authentication device to perform online signup authentication on the terminal device. Alternatively, the first core network element sends first information to the terminal device, where the first information indicates the terminal device to establish a connection to an online signup authentication device; and performs online signup authentication through the online signup authentication device.

According to the foregoing technical solution, the first core network element may also trigger the online signup authentication of the terminal device in a plurality of possible manners. In this way, the online signup method can be more flexible.

With reference to the first aspect, in a possible design of the first aspect, the first information may include one or more of an IP address of the online signup authentication device, a data network name DNN, or network slice selection assistance information NSSAI.

With reference to the first aspect, in a possible design of the first aspect, if the online signup authentication of the terminal device succeeds, the first core network element generates an online signup identifier for the terminal device, and sends the online signup identifier to the terminal device.

With reference to the first aspect, in a possible design of the first aspect, the first message further includes the user group identifier or the network identifier. The first message further indicates the second core network element to set the user group identifier as an allowed user group identifier in subscription data of the terminal device, or to set a user group identifier corresponding to the network identifier as an allowed user group identifier in subscription data of the terminal device.

With reference to the first aspect, in a possible design of the first aspect, the first core network element may further receive the network subscription of the terminal device from the second core network element, where the network subscription may include one or more of the following information: a data network name or network slice selection assistance information NSSAI that is available to the terminal device, and the user group identifier.

With reference to the first aspect, in a possible design of the first aspect, the first core network element may send an online signup announcement message to an online signup device, where the online signup announcement message includes a second identifier of the terminal device, and is used to notify the online signup device of an online signup authentication result of the terminal device.

According to the foregoing technical solution, the first core network element may send the online signup announcement message to the online signup device, to notify the online signup device that the online signup authentication of the terminal device succeeds. In this way, the online signup device may be triggered to generate a user context of the terminal device, to complete signup in an enterprise network.

With reference to the first aspect, in a possible design of the first aspect, the first core network element may further send a third message to the terminal device, where the third message includes an IP address of the online signup device, and the IP address of the online signup device is used by the terminal device to obtain, from the online signup device, the user context generated or updated for the terminal device.

With reference to the first aspect, in a possible design of the first aspect, if the online signup authentication of the terminal device fails, the first core network element may send a fourth message to the terminal device, where the fourth message is used to reject a request of the second message.

According to a second aspect, an embodiment of this application provides an online signup method. The method may be performed by a second core network element, for example, a UDR or a UDM, and the method includes: The second core network element receives a first message from a first core network element or an online signup device, where the first message includes a first identifier of a terminal device, and is used to request the second core network element to generate or update a network subscription of the terminal device. The second core network element generates or updates the network subscription of the terminal device.

According to the foregoing technical solution, the second core network element may receive, from the first core network element, the first message for requesting to generate or update the network subscription of the terminal device, and generate or update the network subscription for the terminal device, to complete the network subscription of the terminal device.

With reference to the second aspect, in a possible design of the second aspect, the first message further includes a user group identifier or a network identifier. Correspondingly, that the second core network element generates or updates the network subscription of the terminal device may include: The second core network element sets the user group identifier as an allowed user group identifier in subscription data of the terminal device, or sets a user group identifier corresponding to the network identifier as an allowed user group identifier in subscription data of the terminal device.

With reference to the second aspect, in a possible design of the second aspect, that the second core network element generates or updates the network subscription of the terminal device may alternatively include: The second core network element generates an online signup identifier, and adds the online signup identifier to subscription data of the terminal device.

With reference to the second aspect, in a possible design of the second aspect, the first message may further include a credential allocated by the online signup device or an online signup authentication device to the terminal device. Correspondingly, that the second core network element generates or updates the network subscription of the terminal device may further include: The second core network element adds the credential to the subscription data of the terminal device.

With reference to the second aspect, in a possible design of the second aspect, that the second core network element generates or updates the network subscription of the terminal device may further include: The second core network element adds, to the subscription data of the terminal device, a data network name DNN and/or network slice selection assistance information NSSAI that are/is available to the terminal device.

According to the foregoing technical solution, the second core network element may generate or update the network subscription of the terminal device in a plurality of possible implementations. In this way, network subscription information of the terminal device can be more complete and abundant, and flexibility of the online signup method can be effectively improved.

With reference to the second aspect, in a possible design of the second aspect, the second core network element may send a signup announcement message to a third core network element, where the signup announcement message includes one or more of the following information added to the subscription data of the terminal device: the data network name DNN or the network slice selection assistance information NSSAI that is available to the terminal device, and the user group identifier.

According to the foregoing technical solution, after generating or updating the network subscription of the terminal device, the second core network element may send the signup announcement message to the third core network element, to trigger the third core network element to update a URSP of the terminal device.

With reference to the second aspect, in a possible design of the second aspect, the DNN and/or the NSSAI that are/is included in the signup announcement message are/is a DNN and/or NSSAI associated with the user group identifier.

According to a third aspect, an embodiment of this application provides an online signup method. The method may be performed by a third core network element, for example, a PCF, and the method includes: The third core network element receives a signup announcement message, where the signup announcement message includes one or more of the following information added to subscription data of a terminal device: a data network name DNN or network slice selection assistance information NSSAI that is available to the terminal device, and a user group identifier. The third core network element generates or updates a terminal device route selection policy URSP of the terminal device based on the signup announcement message, where the URSP may include one or more of the following information added to the subscription data of the terminal device: the data network name DNN or the network slice selection assistance information NSSAI that is available to the terminal device, and the user group identifier. The third core network element sends the URSP to the terminal device.

According to the foregoing technical solution, the third core network element updates the URSP of the terminal device based on the signup announcement message received from a second core network element, so that the terminal device can subsequently access an enterprise network according to the updated URSP.

With reference to the third aspect, in a possible design of the third aspect, the URSP further includes an identifier of an application available to the terminal device and an association relationship between the application and one or more of the DNN, the NSSAI, or the user group identifier.

According to a fourth aspect, an embodiment of this application provides an online signup method. The method may be performed by a terminal device, and the method includes: The terminal device receives a terminal device route selection policy URSP from a third core network element, where the URSP includes one or more of the following information added to subscription data of the terminal device: a data network name DNN or network slice selection assistance information NSSAI that is available to the terminal device, and a user group identifier. The terminal device accesses a network according to the received URSP, where the network may be an enterprise network.

With reference to the fourth aspect, in a possible design of the fourth aspect, the URSP further includes an identifier of an application available to the terminal device and an association relationship between the application and one or more of the DNN, the NSSAI, or the user group identifier.

That the terminal device accesses a network according to the received URSP may be: Based on the association relationship, the terminal device uses DNN, NSSAI and accesses the user group identifier that are associated with a currently used application to access the network.

With reference to the fourth aspect, in a possible design of the fourth aspect, the terminal device may further obtain a generated or updated network subscription from a first core network element.

According to a fifth aspect, an embodiment of this application provides a communication apparatus. The apparatus has a function of implementing the first core network element according to any one of the first aspect or the possible designs of the first aspect, a function of implementing the second core network element according to any one of the second aspect or the possible designs of the second aspect, or a function of implementing the third core network element according to any one of the third aspect or the possible designs of the third aspect. The apparatus may be a network device, or may be a chip included in the network device. The function of the communication apparatus may be implemented by hardware, or may be implemented by hardware executing corresponding software. The hardware or the software includes one or more modules corresponding to the function.

The apparatus may alternatively have a function of implementing the terminal device according to any one of the fourth aspect or the possible designs of the fourth aspect. The apparatus may be a terminal device, or may be a chip included in the terminal device. The function of the communication apparatus may be implemented by hardware, or may be implemented by hardware executing corresponding software. The hardware or the software includes one or more modules corresponding to the function.

In a possible design, a structure of the apparatus includes a processing module and a transceiver module. The processing module is configured to support the apparatus to perform a corresponding function of the first core network element according to any one of the first aspect or the designs of the first aspect, a corresponding function of the second core network element according to any one of the second aspect or the designs of the second aspect, a corresponding function of the third core network element according to any one of the third aspect or the possible designs of the third aspect, or a corresponding function of the terminal device according to any one of the fourth aspect or the possible designs of the fourth aspect. The transceiver module is configured to support communication between the apparatus and another communication device. For example, when the apparatus is the first core network element, the transceiver module may send a first message to a second core network element, where the first message is used to request the second core network element to generate or update a network subscription of a terminal device. The communication apparatus may further include a storage module. The storage module is coupled to the processing module, and stores program instructions and data that are necessary for the apparatus. In an example, the processing module may be a processor, a communication module may be a transceiver, and the storage module may be a memory. The memory may be integrated with the processor, or may be separate from the processor. This is not limited in this application.

In another possible design, a structure of the apparatus includes a processor, and may further include a memory. The processor is coupled to the memory, and may be configured to execute computer program instructions stored in the memory, to enable the apparatus to perform the method according to any one of the first aspect or the possible designs of the first aspect, the method according to any one of the second aspect or the possible designs of the second aspect, the method according to any one of the third aspect or the possible designs of the third aspect, or the method according to any one of the fourth aspect or the possible designs of the fourth aspect. Optionally, the apparatus further includes a communication interface, and the processor is coupled to the communication interface. When the apparatus is the network device, the communication interface may be a transceiver or an input/output interface. When the apparatus is the chip included in the network device, the communication interface may be an input/output interface of the chip. Optionally, the transceiver may be a transceiver circuit, and the input/output interface may be an input/output circuit.

According to a sixth aspect, an embodiment of this application provides a chip system, including a processor, where the processor is coupled to a memory, and the memory is configured to store a program or instructions. When the program or the instructions is/are executed by the processor, the chip system is enabled to implement the method according to any one of the first aspect or the possible designs of the first aspect, the method according to any one of the second aspect or the possible designs of the second aspect, the method according to any one of the third aspect or the possible designs of the third aspect, or the method according to any one of the fourth aspect or the possible designs of the fourth aspect.

Optionally, the chip system further includes an interface circuit, and the interface circuit is configured to transmit code instructions to the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be separate from the processor. This is not limited in this application. For example, the memory may be a non-transitory memory, for example, a read-only memory ROM. The memory and the processor may be integrated onto a same chip, or may be separately disposed on different chips. A type of the memory and a manner of disposing the memory and the processor are not specifically limited in this application.

According to a seventh aspect, an embodiment of this application provides a computer-readable storage medium, storing a computer program or instructions. When the computer program or the instructions is/are executed, a computer is enabled to perform the method according to any one of the first aspect or the possible designs of the first aspect, the method according to any one of the second aspect or the possible designs of the second aspect, the method according to any one of the third aspect or the possible designs of the third aspect, or the method according to any one of the fourth aspect or the possible designs of the fourth aspect.

According to an eighth aspect, an embodiment of this application provides a computer program product. When a computer reads and executes the computer program product, the computer is enabled to perform the method according to any one of the first aspect or the possible designs of the first aspect, the method according to any one of the second aspect or the possible designs of the second aspect, the method according to any one of the third aspect or the possible designs of the third aspect, or the method according to any one of the fourth aspect or the possible designs of the fourth aspect.

According to a ninth aspect, an embodiment of this application provides a communication system. The communication system includes the foregoing first core network device, second core network device, and third core network device. Optionally, the communication system may further include an access network device and a terminal device.

### BRIEF DESCRIPTION OF DRAWINGS

FIG. 1 is a schematic diagram of an existing online signup solution;
FIG. 2 is a schematic diagram of a network architecture of a communication system to which an embodiment of this application is applicable;
FIG. 3A and FIG. 3B are a schematic flowchart of an online signup method according to an embodiment of this application;

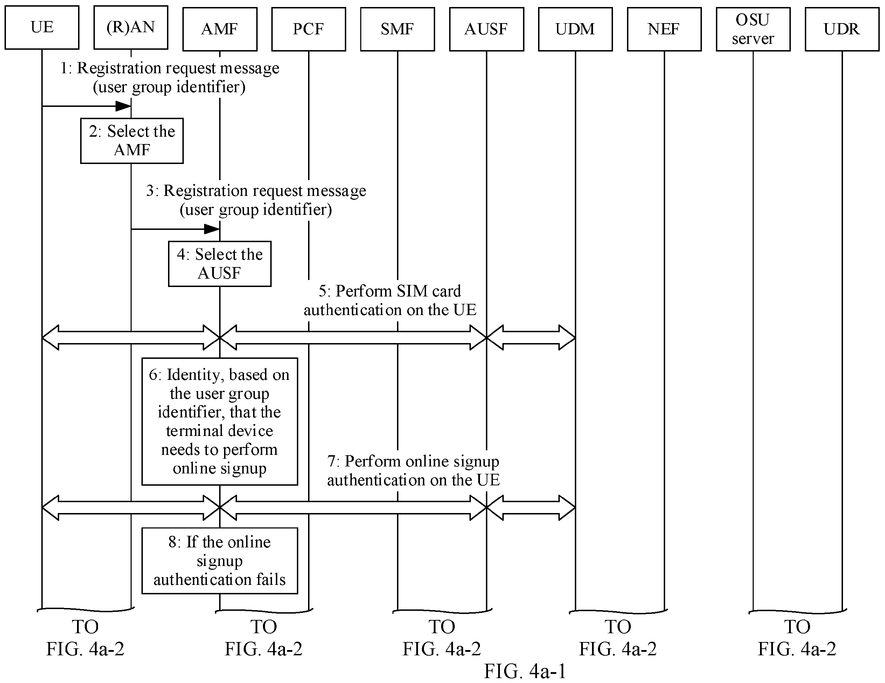

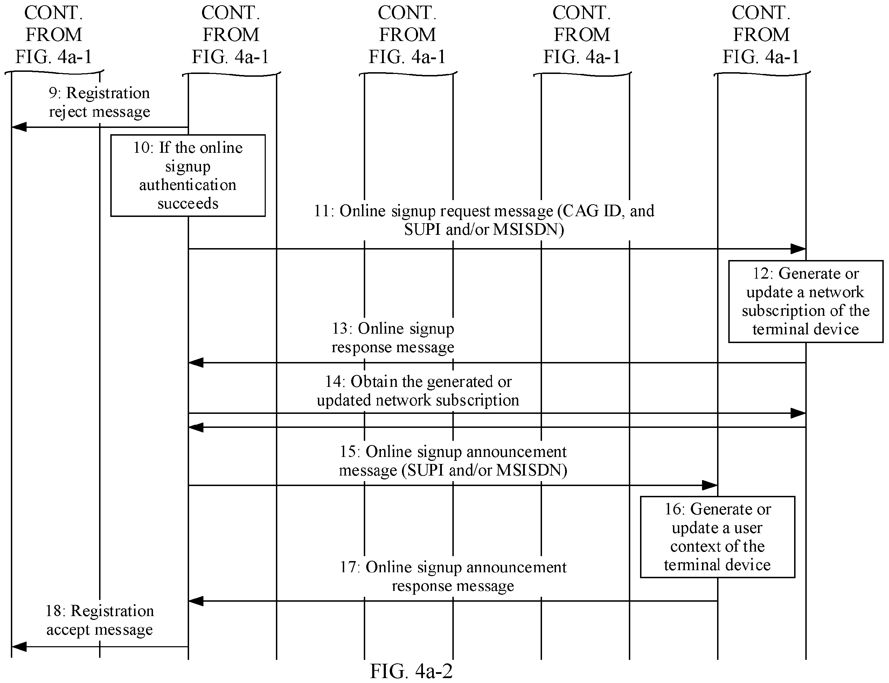

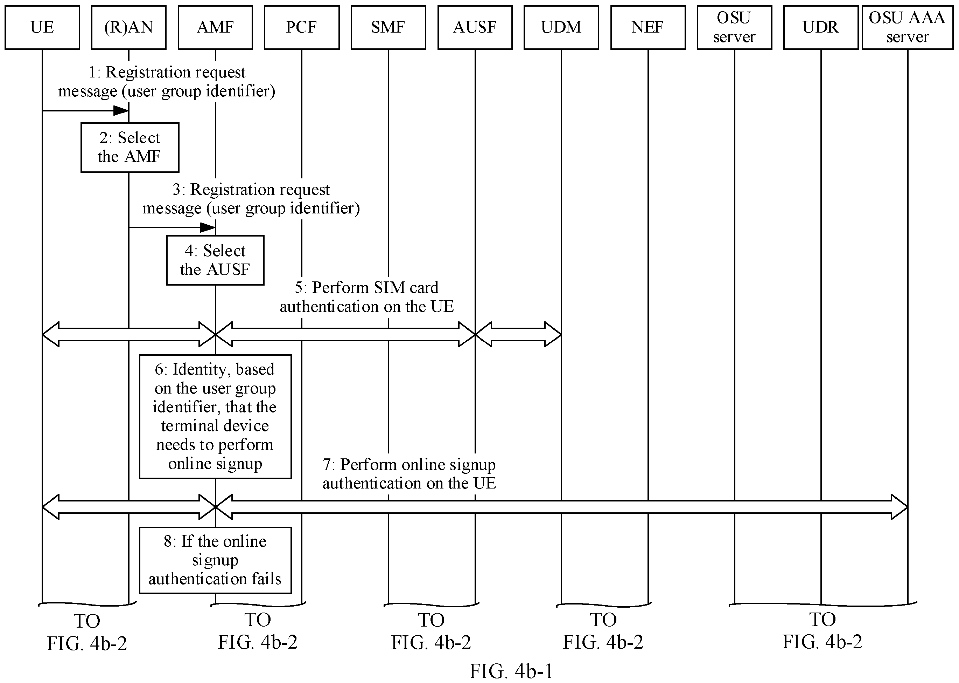

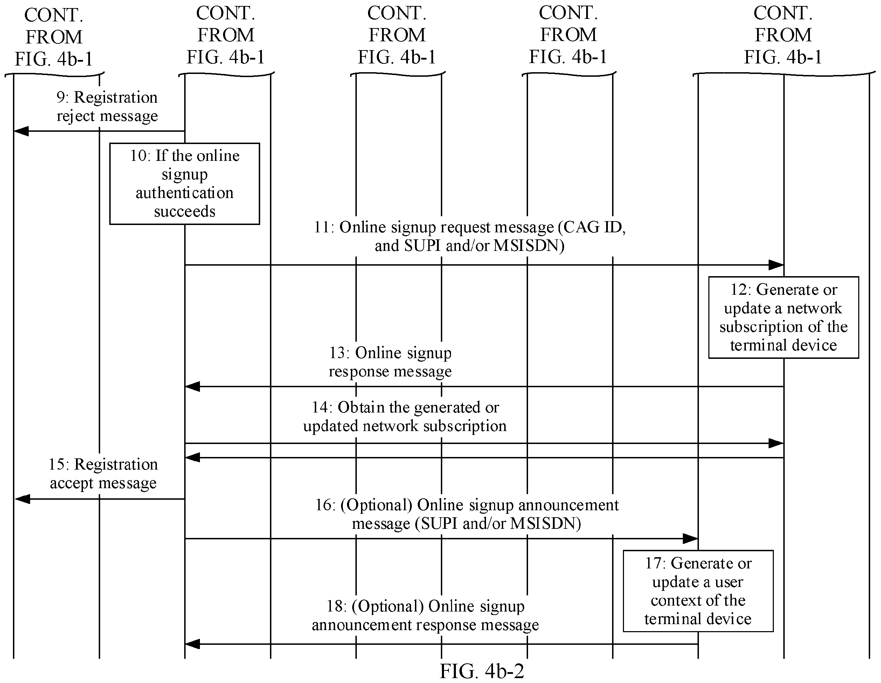

FIG. 4a-1 and FIG. 4a-2 and FIG. 4b-1 and FIG. 4b-2 show specific examples of an online signup method according to an embodiment of this application;

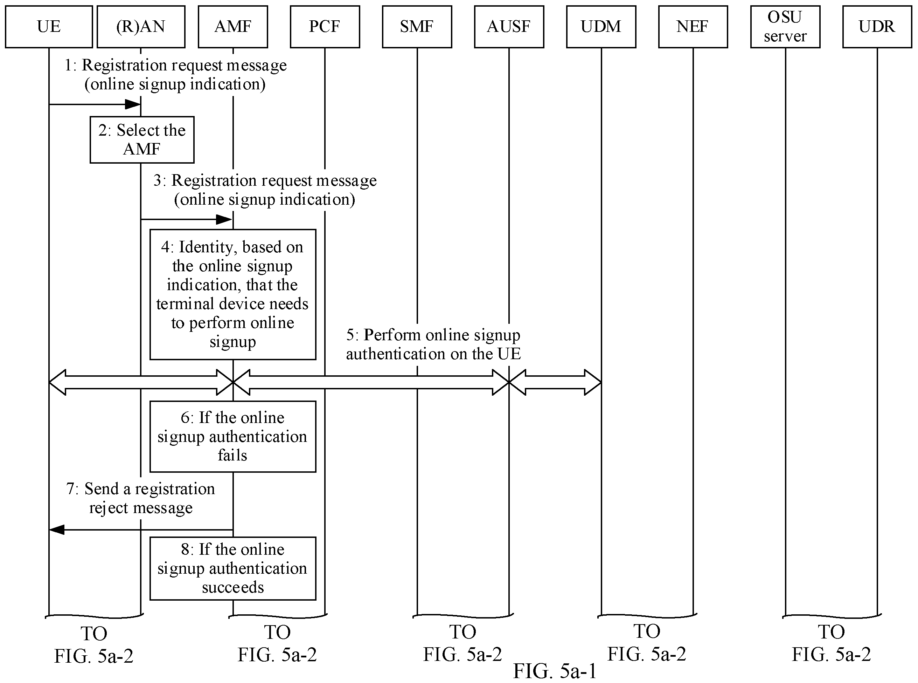

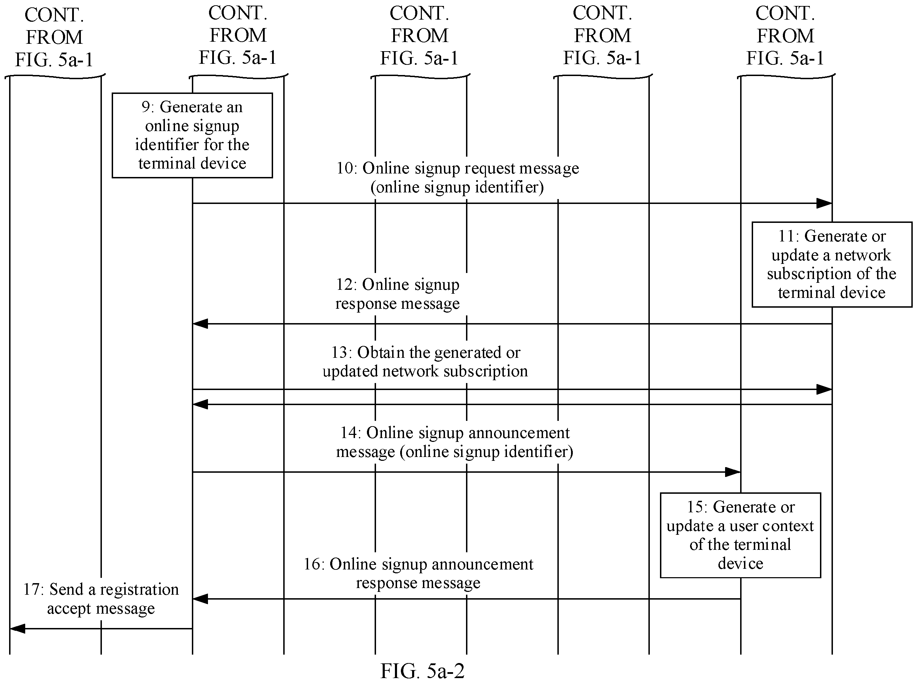

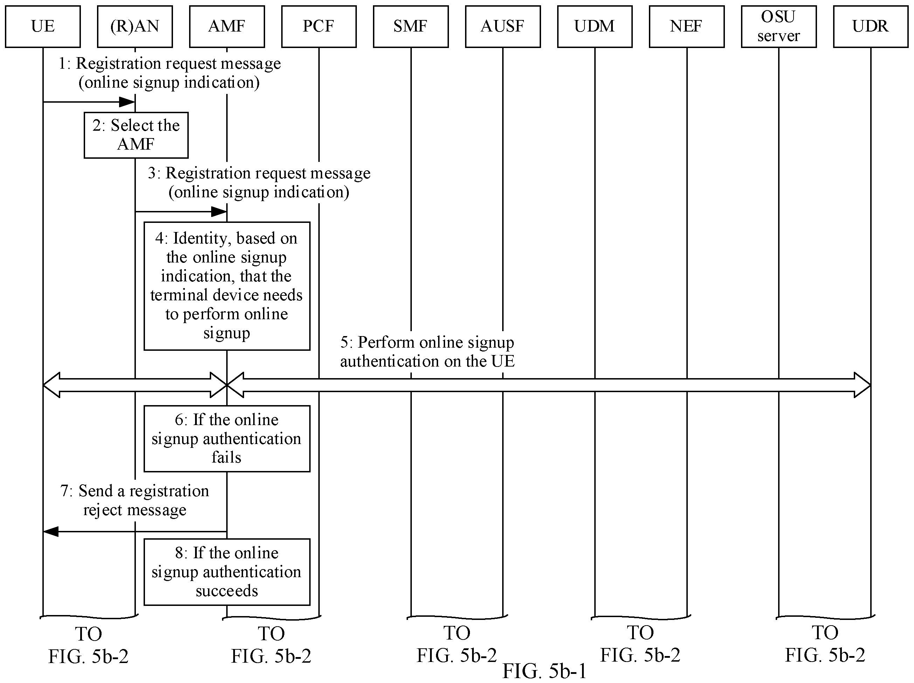

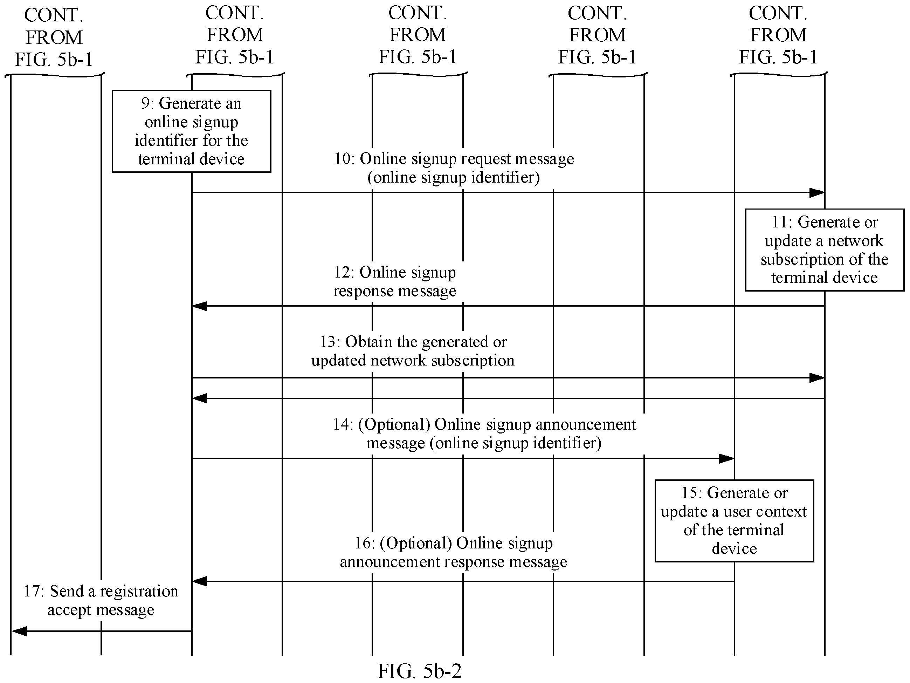

FIG. 5a-1 and FIG. 5a-2 and FIG. 5b-1 and FIG. 5b-2 show other specific examples of an online signup method according to an embodiment of this application;

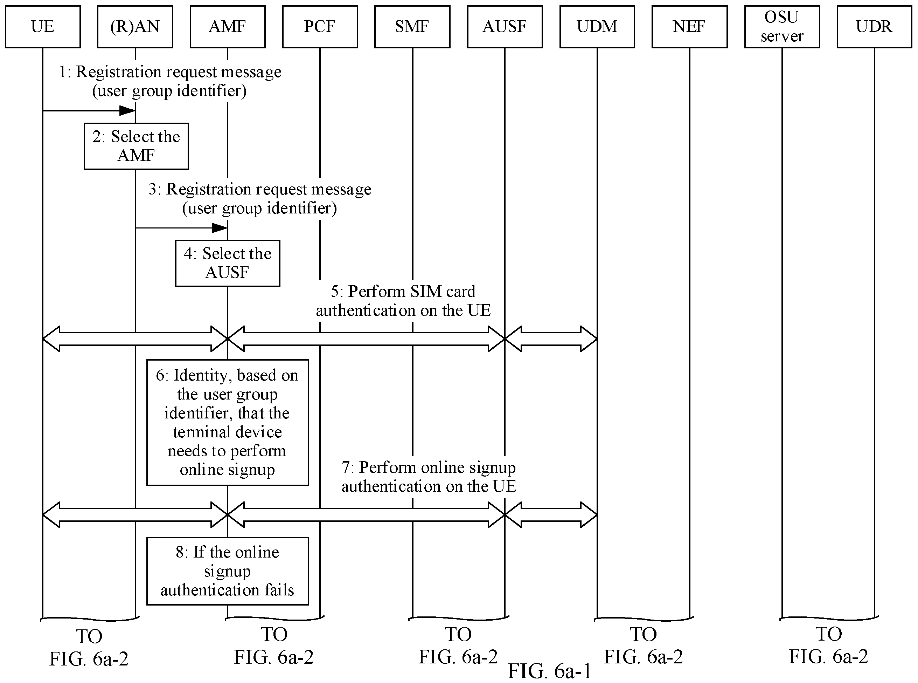

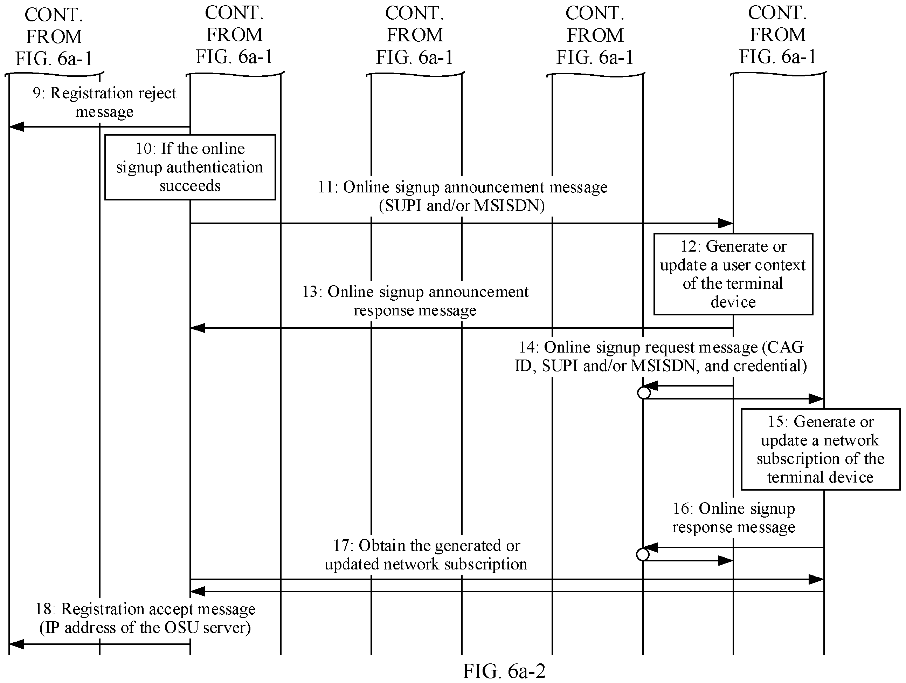

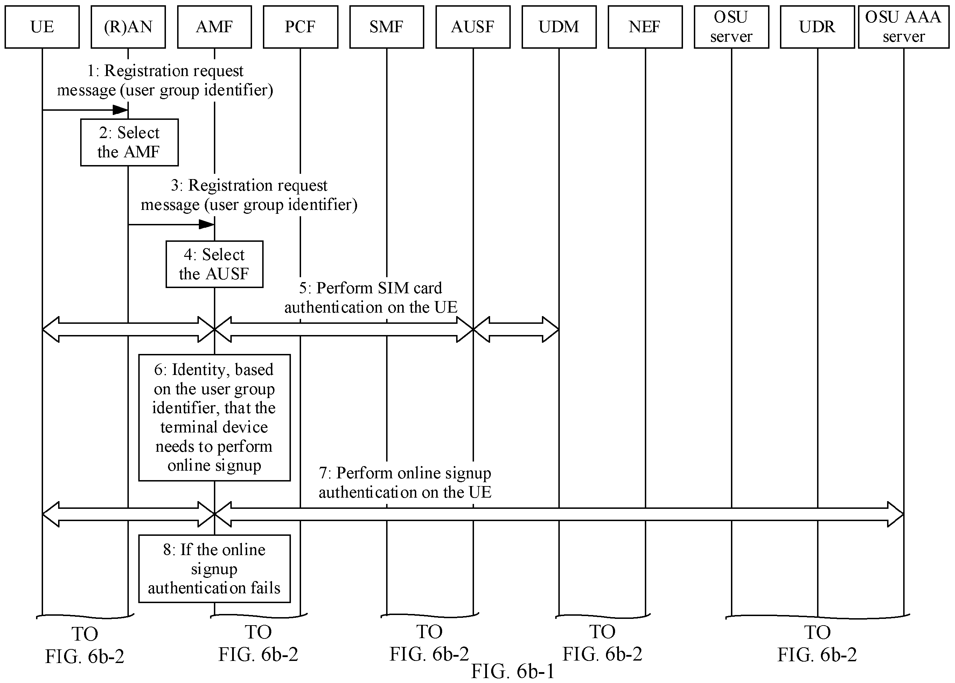

FIG. 6a-1 and FIG. 6a-2 and FIG. 6b-1 and FIG. 6b-2 show other specific examples of an online signup method according to an embodiment of this application;

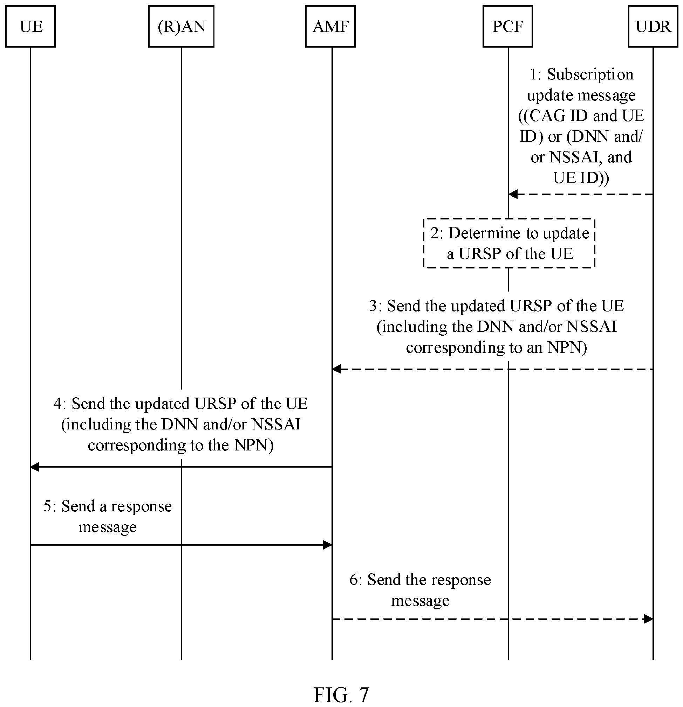

FIG. 7 is a schematic diagram of a URSP update process in an online signup method according to an embodiment of this application;

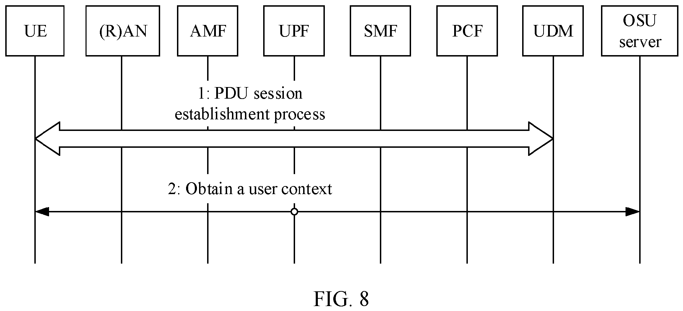

FIG. 8 is a schematic diagram of a user context obtaining process in an online signup method according to an embodiment of this application;

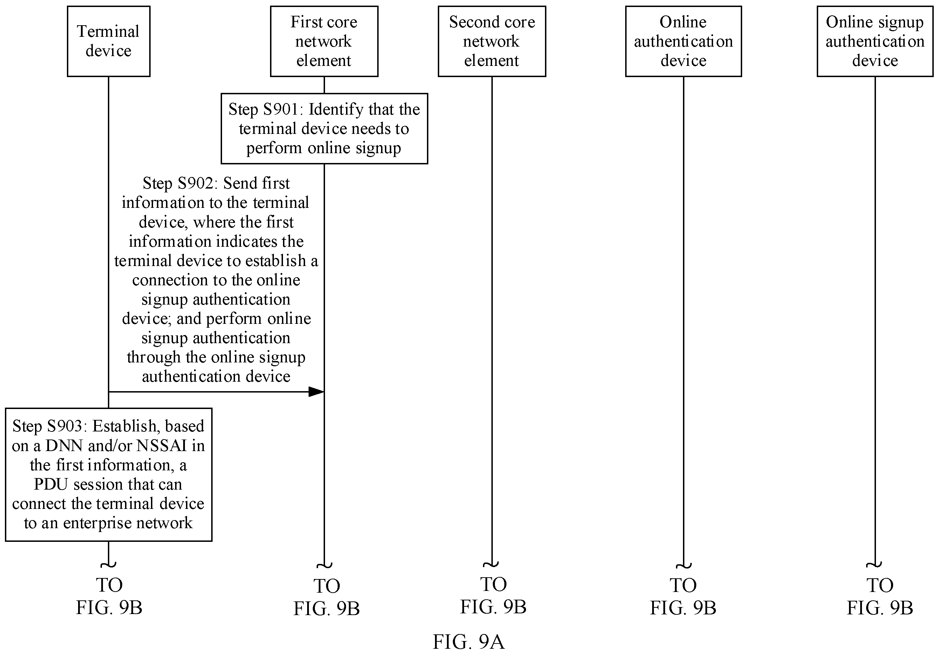

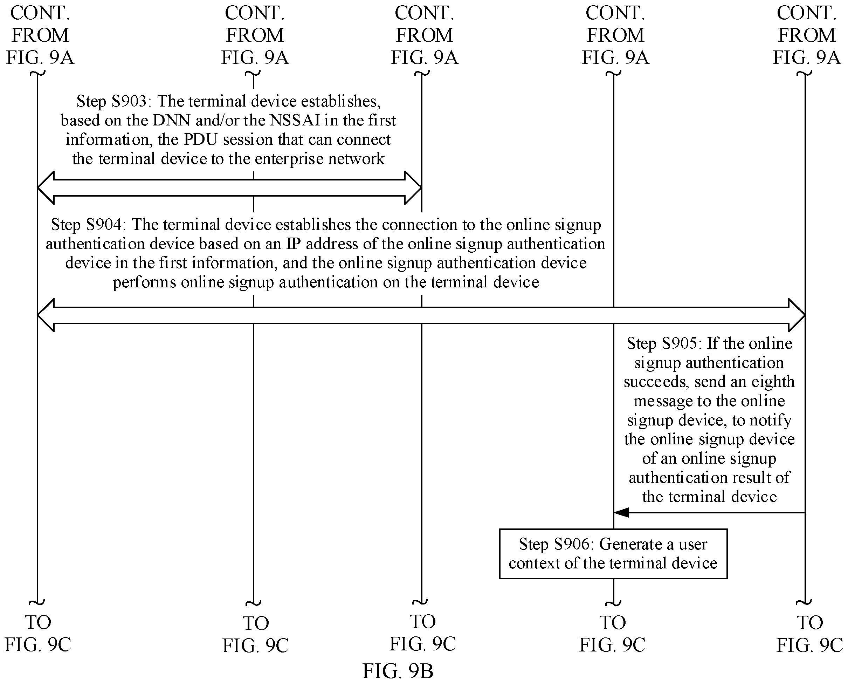

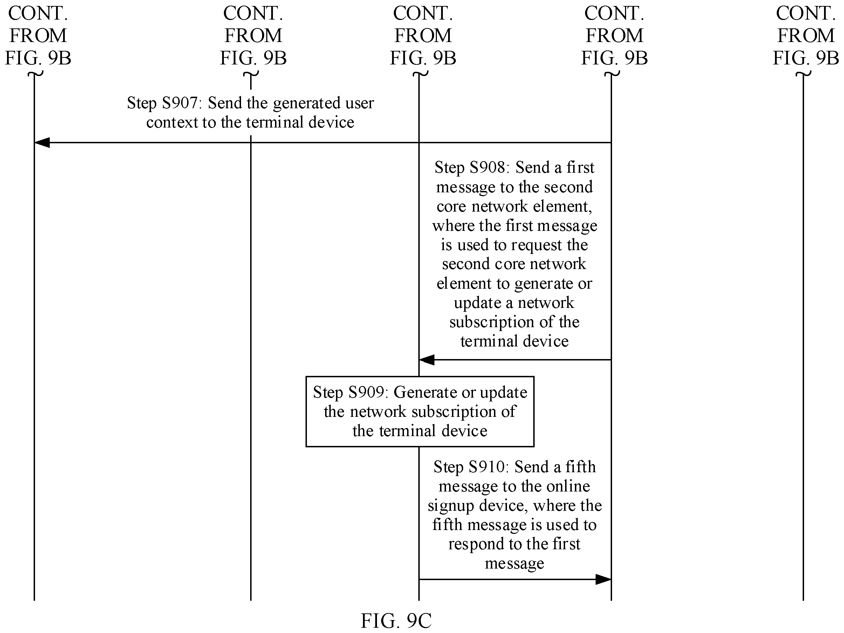

FIG. 9A to FIG. 9C are a schematic flowchart of another online signup method according to an embodiment of this application;

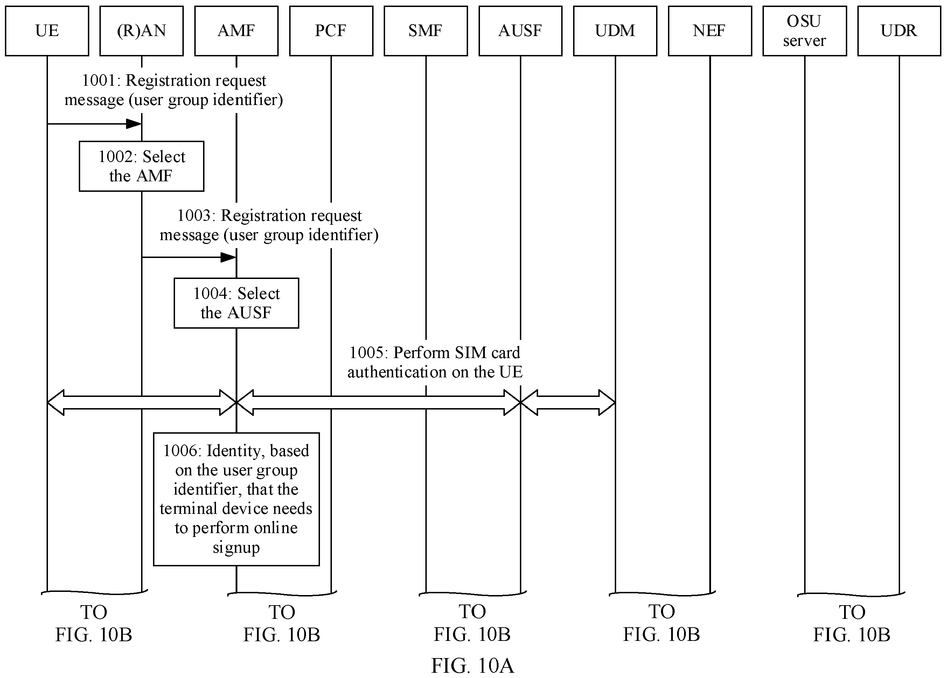

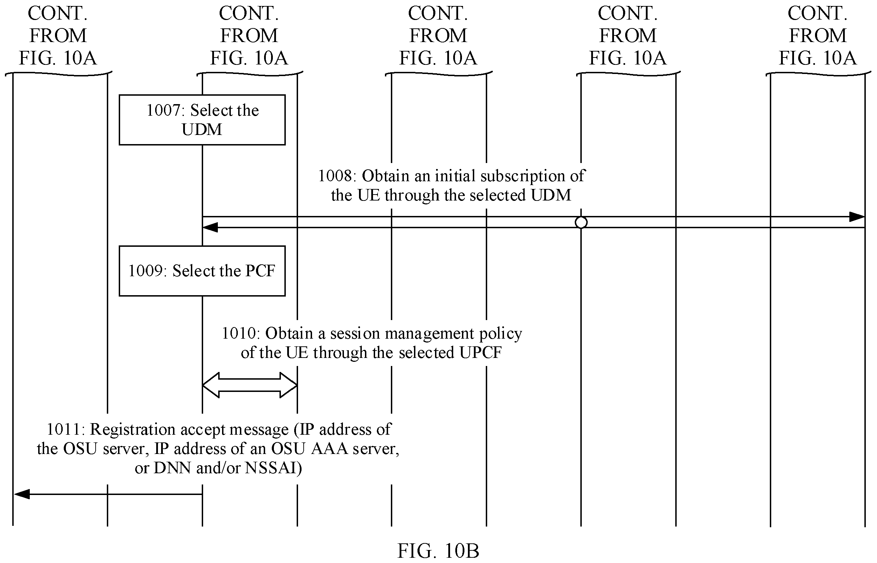

FIG. 10A and FIG. 10B are a schematic diagram of a registration process in another online signup method according to an embodiment of this application;

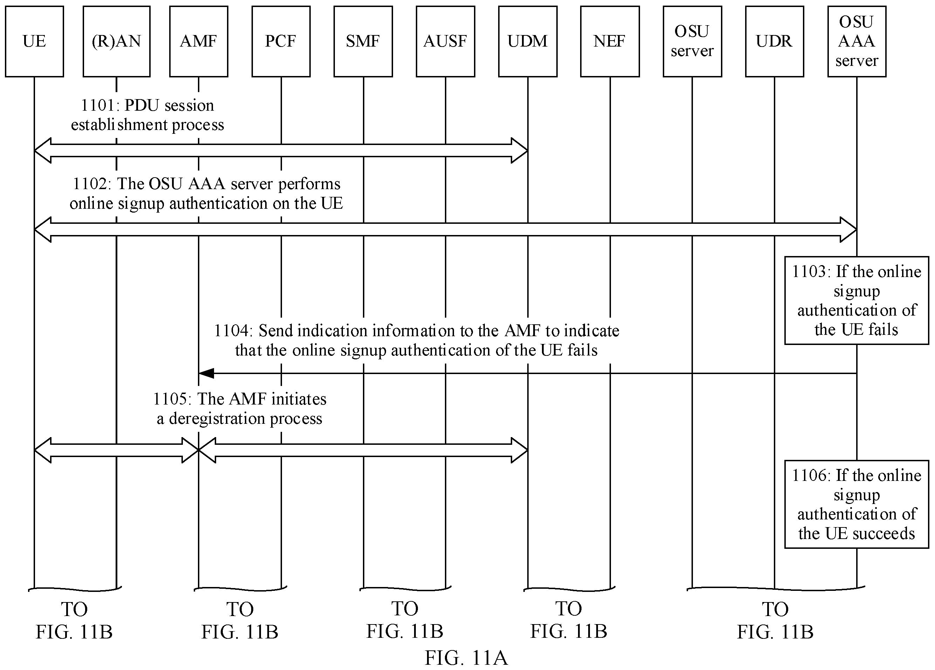

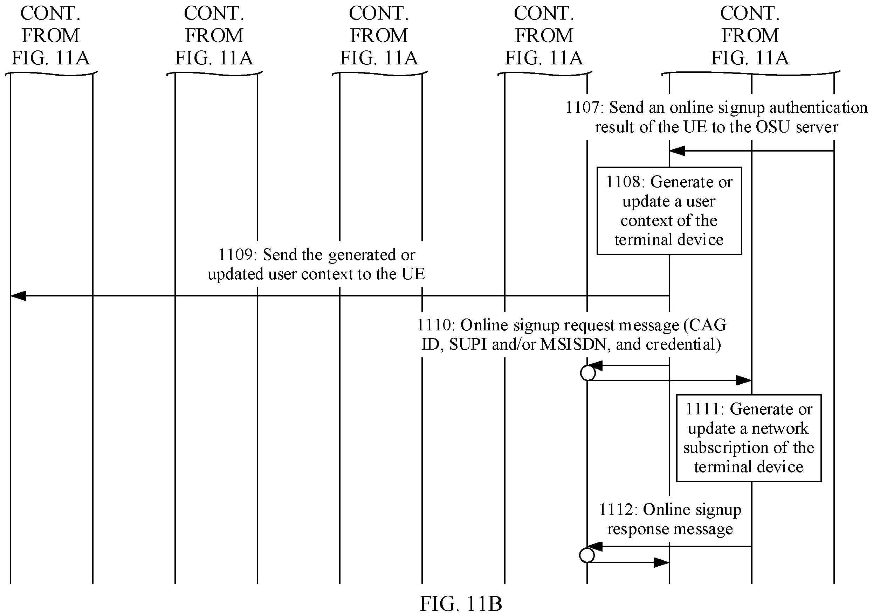

FIG. 11A and FIG. 11B show an example of an online signup process in another online signup method according to an embodiment of this application;

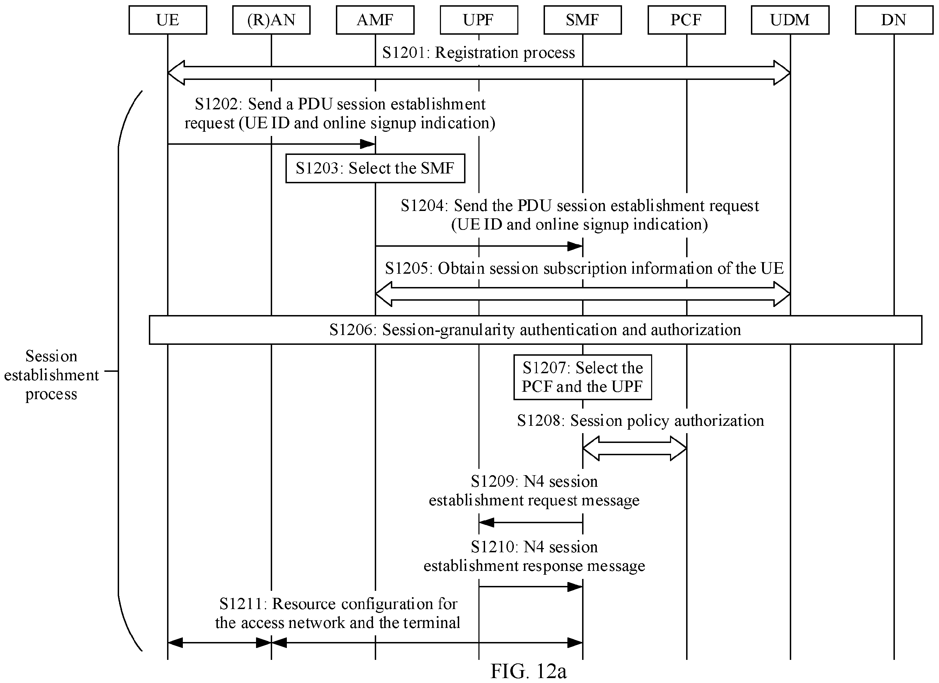

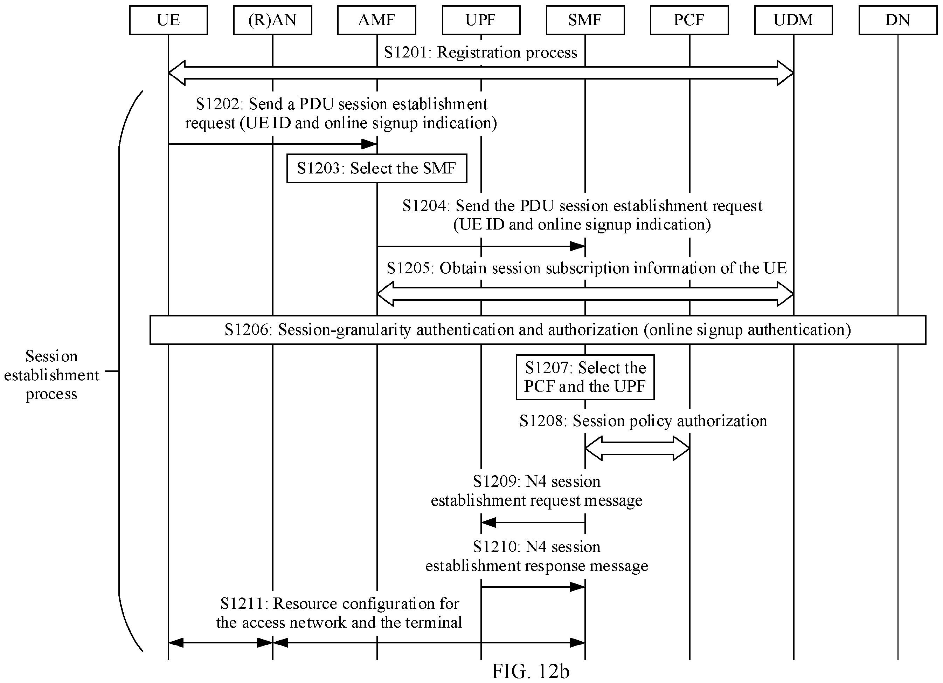

FIG. 12a and FIG. 12b show examples of a session establishment process in another online signup method according to an embodiment of this application;

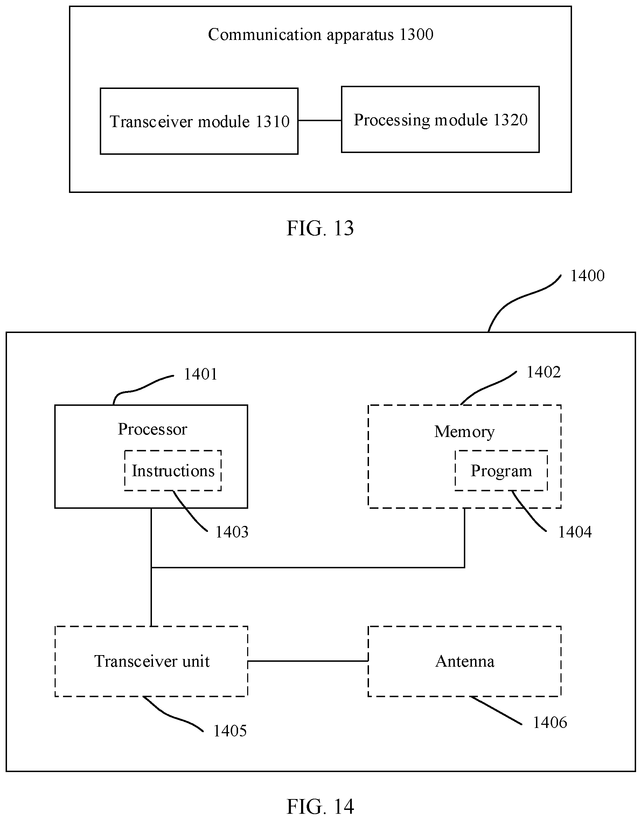

FIG. 13 is a schematic diagram of a structure of a communication apparatus according to an embodiment of this application;
FIG. 14 is a schematic diagram of another structure of a communication apparatus according to an embodiment of this application;

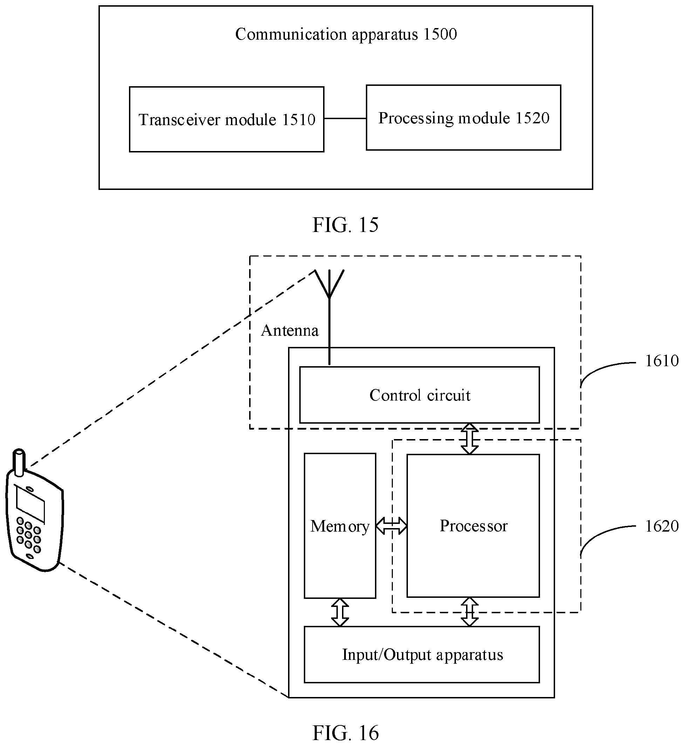

FIG. 15 is a schematic diagram of a structure of another communication apparatus according to an embodiment of this application; and
FIG. 16 is a schematic diagram of another structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The technical solutions of embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) system or a new radio (new radio, NR) system, or may be applied to a future communication system or another similar communication system.

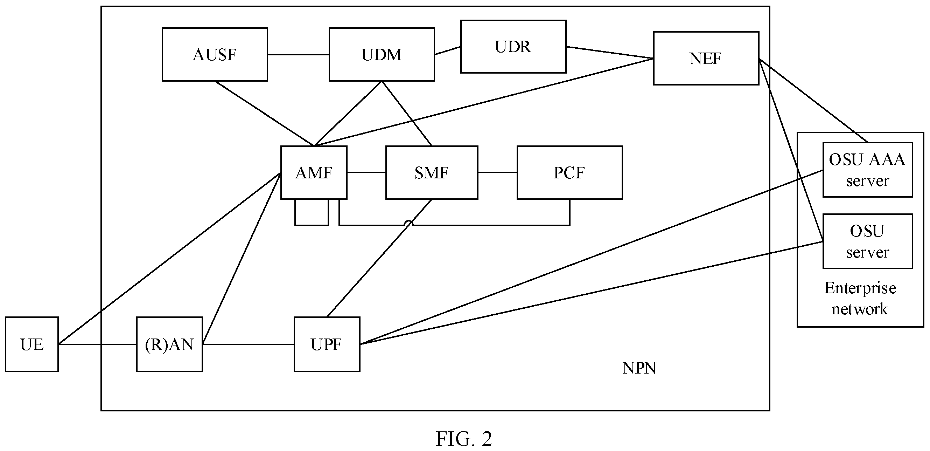

FIG. 2 is a schematic diagram of a network architecture of a communication system to which an embodiment of this application is applicable. The network architecture includes a terminal device, an NPN, and an enterprise network. The terminal device may access the enterprise network through the NPN. The NPN may be deployed by an operator and provided for the enterprise network to use, or may be deployed by an enterprise. This is not limited in this application.

The terminal device is a device having a wireless transceiver function. The terminal device may be deployed on the land, including an indoor or outdoor device, a handheld device, a wearable device, or a vehicle-mounted device; may be deployed on the water surface (for example, on a ship); or may be deployed in the air (for example, on an airplane, a balloon, or a satellite). The terminal device may communicate with a core network through a radio access network (radio access network, RAN), and exchange a voice and/or data with the RAN. The terminal device may be a mobile phone (mobile phone), a tablet computer (Pad), a computer having a wireless transceiver function, a mobile Internet device (mobile Internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal device may also be sometimes referred to as user equipment (user equipment, UE), a mobile station, a remote station, and the like. A specific technology, a device form, and a name that are used by the terminal device are not limited in embodiments of this application.

The NPN specifically includes an access network device, an access management network element, a session management network element, a user plane network element, a policy control network element, an authentication server function network element, a unified data management network element, a unified data repository network element, and a network capability exposure network element. The NPN may further include another network element. This is not limited in embodiments of this application.

The access network device is a device that is in a network and that is configured to connect the terminal device to a wireless network. The access network device may be a node in the radio access network, and may also be referred to as a base station or a radio access network (radio access network, RAN) node (or device). A network device may include an evolved NodeB (NodeB, eNB, or e-NodeB, evolved Node B) in a long term evolution (long term evolution, LTE) system or an LTE-advanced (LTE-Advanced, LTE-A) system, for example, a conventional macro eNodeB eNB or a micro eNodeB eNB in a heterogeneous network scenario, may include a next generation NodeB (next generation NodeB, gNB) in a 5th generation mobile communication technology (5th generation, 5G) new radio (new radio, NR) system, may include a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB or a home NodeB, HNB), a baseband unit (baseband unit, BBU), a baseband unit pool BBU pool, a Wi-Fi access point (access point, AP), or the like, or may include a centralized unit (centralized unit, CU) and a distributed unit (distributed unit, DU) in a cloud radio access network (cloud radio access network, CloudRAN) system. This is not limited in embodiments of this application. In a split deployment scenario in which the access network device includes the CU and the DU, the CU supports protocols such as a radio resource control (radio resource control, RRC) protocol, a packet data convergence protocol (packet data convergence protocol, PDCP), and a service data adaptation protocol (service data adaptation protocol, SDAP), and the DU mainly supports a radio link control (radio link control, RLC) protocol, a media access control (media access control, MAC) protocol, and a physical layer protocol.

The access management network element is mainly used for attachment, mobility management, and a tracking area update process of the terminal in a mobile network. The access management network element terminates a non-access stratum (non-access stratum, NAS) message, completes registration management, connection management, reachability management, tracking area list (tracking area list, TAlist) allocation, mobility management, and the like, and transparently routes a session management (session management, SM) message to the session management network element. In a 5th generation (5th generation, 5G) communication system, the access management network element may be an access and mobility management function (access and mobility management function, AMF). In a future communication system (for example, a 6G communication system), a mobility management network element may still be an AMF network element, or may have another name. This is not limited in this application.

The session management network element is mainly used for session management in the mobile network, for example, session establishment, modification, and release. Specific functions are, for example, assigning an Internet protocol (Internet protocol, IP) address to the terminal, or selecting a user plane network element that provides a packet forwarding function. In the 5G communication system, the session management network element may be a session management function (session management function, SMF). In the future communication system (for example, the 6G communication system), the session management network element may still be an SMF network element, or may have another name. This is not limited in this application.

The user plane network element is mainly responsible for performing processing such as forwarding, charging, and lawful interception on a user packet. The user plane network element may also be referred to as a protocol data unit (protocol data unit, PDU) session anchor (PDU session anchor, PSA). In the 5G communication system, the user plane network element may be a user plane function (user plane function, UPF). In the future communication system (for example, the 6G communication system), the user plane network element may still be a UPF network element, or may have another name. This is not limited in this application.

The policy control network element has a subscriber subscription data management function, a policy control function, a charging policy control function, a quality of service (quality of service, QoS) control function, and the like. In the 5G communication system, the policy control network element may be a policy control function (policy control function, PCF). In the future communication system (for example, the 6G communication system), the policy control network element may still be a PCF network element, or may have another name. This is not limited in this application.

The authentication server function network element is mainly configured to perform security authentication on the terminal device. In the 5G communication system, the authentication server function network element may be an authentication server function (authentication server function, AUSF). In the future communication system (for example, the 6G communication system), the authentication server function network element may still be an AUSF network element, or may have another name. This is not limited in this application.

The unified data management network element is mainly configured to manage subscription information of the terminal device. In the 5G communication system, the unified data management network element may be a unified data management (unified data management, UDM). In the future communication system (for example, the 6G communication system), the unified data management network element may still be a UDM network element, or may have another name. This is not limited in this application.

The unified data repository network element is mainly responsible for storing structured data information, including subscription information, policy information, and network data or service data defined in a standard format. In the 5G communication system, the unified data repository network element may be a unified data repository (unified data repository, UDR). In the future communication system (for example, the 6G communication system), the unified data repository network element may still be a UDR network element, or may have another name. This is not limited in this application.

The network capability exposure network element may expose some functions of the network to an application in a controlled manner. In the 5G communication system, the network capability exposure network element may be a network exposure function (network exposure function, NEF). In the future communication system (for example, the 6G communication system), the network capability exposure network element may still be an NEF network element, or may have another name. This is not limited in this application.

The enterprise network includes an online signup device (OSU server) and an online signup authentication device (OSU AAA server). The online signup device is configured to generate, in an online signup process, subscription data to be provided by the enterprise for the terminal device, and the online signup authentication device is configured to perform authentication on the terminal device in the online signup process. In an example, the online signup device may be an online signup server, and the online signup authentication device may be an online signup authentication server. The online signup device and the online signup authentication device may be jointly deployed, or may be independent of each other. This is not limited in this application.

It should be understood that the foregoing network elements or functions may be network elements in a hardware device, software functions running on dedicated hardware, or virtualized functions instantiated on a platform (for example, a cloud platform).

For ease of description, this application is described below by using an example in which the access management network element is an AMF network element, the session management network element is an SMF network element, the authentication server function network element is an AUSF network element, the unified data repository network element is a UDR network element, the unified data management network element is a UDM network element, and the policy control network element is a PCF network element. Further, the AMF network element is referred to as an AMF for short, the SMF network element is referred to as an SMF for short, the AUSF network element is referred to as an AUSF for short, the UDR network element is referred to as a UDR for short, the UDM network element is referred to as a UDM for short, and the PCF network element is referred to as a PCF for short. In other words, in the following descriptions of this application, the AMF may be replaced with the access management network element, the SMF may be replaced with the session management network element, the AUSF may be replaced with the authentication server function network element, the UDR may be replaced with the unified data repository network element, the UDM may be replaced with the unified data management network element, and the PCF may be replaced with the policy control network element.

It should be noted that the terms "system" and "network" may be used interchangeably in embodiments of this application. "A plurality of' means two or more. In view of this, "a plurality of' may also be understood as "at least two" in embodiments of this application. The term "at least one" may be understood as one or more, for example, understood as one, two, or more. For example, "including at least one" means including one, two, or more, and does not limit which items are included. For example, if at least one of A, B, and C is included, A, B, C, A and B, A and C, B and C, or A, B, and C may be included. Descriptions such as "at least one type" are also similarly understood. The term "and/or" describes an association relationship between associated objects and represents that three relationships may exist. For example, A and/or B may represent the following three cases: Only A exists, both A and B exist, and only B exists. In addition, unless otherwise specified, the character "/" generally indicates an "or" relationship between associated objects.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, the descriptions of "first" and "second" do not necessarily indicate that the objects are different.

### Embodiment 1

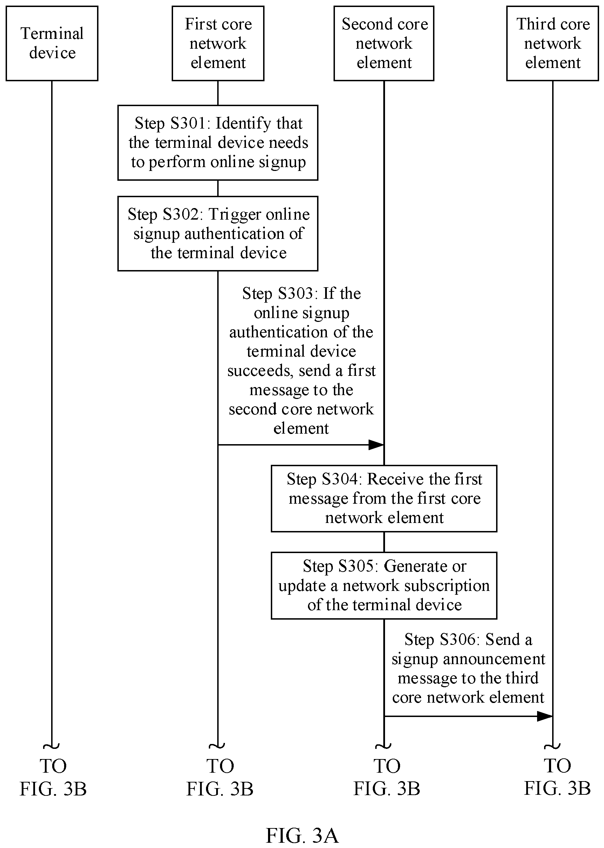

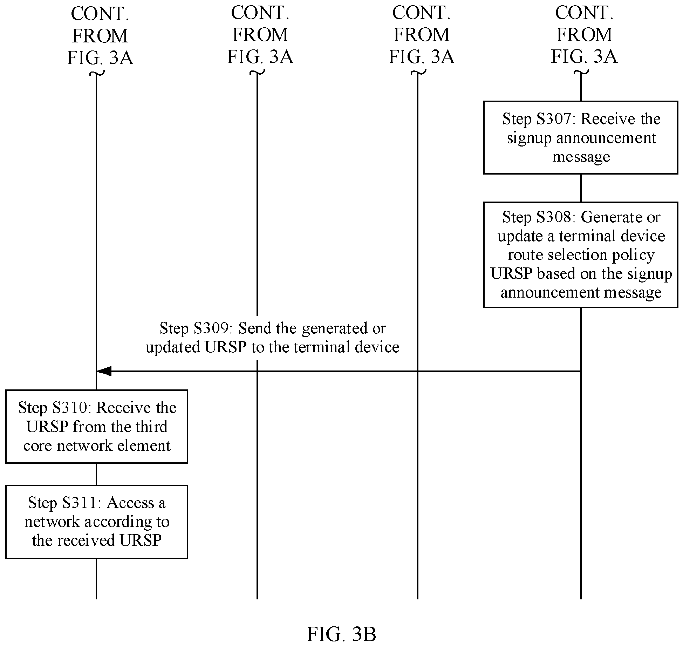

FIG. 3A and FIG. 3B are a schematic flowchart of an online signup method according to this embodiment of this application. The method specifically includes the following steps.

Step S301: A first core network element identifies that a terminal device needs to perform online signup.

All the first core network element, a second core network element, and a third core network element in this embodiment of this application are network elements in an NPN. Specifically, the first core network element may be an AMF or an SMF, the second core network element may be a UDR or a UDM, and the third core network element may be a PCF.

In step S301, the first core network element may receive a second message from the terminal device or an access network device, and identify, based on a user group identifier, a network identifier, or an online signup indication included in the second message, that online signup authentication needs to be performed on the terminal device. The second message may be a registration request (registration request) message, or may have another name. This is not limited in this application.

For example, in examples shown in FIG. 4a-1 and FIG. 4a-2 and FIG. 4b-1 and FIG. 4b-2, a first core network element is an AMF, and a terminal device may send a registration request message to an access network device, where the registration request message includes a user group identifier or a network identifier of a user group to which the terminal device belongs, and the user group identifier may be, for example, a closed access group identifier (closed access group identifier, CAG ID). Then, the access network device selects the AMF, and forwards the received registration request message to the corresponding AMF. After receiving the registration request message, the AMF performs determining based on the user group identifier or the network identifier in the registration request message. If determining that the terminal device does not belong to a user group corresponding to the user group identifier, or does not belong to a user group corresponding to the network identifier, the AMF identifies that the terminal device needs to perform online signup. It should be understood that, herein, that the AMF determines that the terminal device does not belong to a user group corresponding to the user group identifier means: Currently, the AMF does not consider that the terminal device belongs to the user group corresponding to the user group identifier, or the AMF does not identify, based on a current subscription of the terminal device, that the terminal device belongs to the group identified by the user group identifier. That the AMF determines that the terminal device does not belong to a user group corresponding to the network identifier is also similarly understood. Optionally, after receiving the registration request message, the AMF may select an AUSF, and perform SIM card authentication on the terminal device through the selected AUSF. After the authentication succeeds, the AMF further identifies, based on the user group identifier in the registration request message, that the terminal device needs to perform online signup.

For another example, in examples shown in FIG. 5a-1 and FIG. 5a-2 and FIG. 5b-1 and FIG. 5b-2, a first core network element is an AMF, and a terminal device may send a registration request message to an access network device, where the registration request message includes an online signup indication (OSU indication), and the online signup indication may be explicit indication information, or may be a special data network name (data network name, DNN) or special network slice selection assistance information (network slice selection assistance information, NSSAI). This is not limited in this application. Then, the access network device selects the AMF, and forwards the received registration request message to the corresponding AMF. After receiving the registration request message, the AMF may identify, based on the online signup indication in the registration request message, that online signup authentication needs to be performed on the terminal device.

Step S302: The first core network element triggers the online signup authentication of the terminal device, where the online signup authentication is a process of performing authentication on identity information provided by the terminal device.

In this embodiment of this application, there may be a plurality of possible implementations of performing online signup authentication on the terminal device. In an implementation, the first core network element may send an authentication message to an AUSF, to trigger the AUSF to perform online signup authentication on the terminal device, where the authentication message may be an authentication request message or an authentication response message. Optionally, when performing online signup on the terminal device, the AUSF may obtain subscription data of the terminal device through the UDM. After completing the online signup authentication, the AUSF may notify the first core network element of an online signup authentication result of the terminal device.

In another implementation, the first core network element may send an authentication message to an online signup authentication device, to trigger the online signup authentication device to perform online signup authentication on the terminal device. After completing the online signup authentication, the online signup authentication device may notify the first core network element of an online signup authentication result of the terminal device.

For example, in the examples shown in FIG. 4a-1 and FIG. 4a-2 and FIG. 5a-1 and FIG. 5a-2, the first core network element is the AMF, and the AMF performs online signup authentication on the terminal device through the AUSF. In the examples shown in FIG. 4b-1 and FIG. 4b-2 and FIG. 5b-1 and FIG. 5b-2, the first core network element is the AMF, and the AMF performs online signup authentication on the terminal device through an online signup authentication device.

It should be understood that the online signup authentication performed by a network on the terminal device in this embodiment of this application may be credential-based device authentication (for example, EAP-TLS), may be user name and password-based authentication (for example, EAP-TTLS), or may be other authentication. This is not limited in this application.

Step S303: If the online signup authentication of the terminal device succeeds, the first core network element sends a first message to a second core network element, where the first message includes a first identifier of the terminal device, and is used to request the second core network element to generate or update a network subscription of the terminal device.

The first message may be an online signup request (online signup request) message, or may have another name. This is not limited in this application. The first identifier of the terminal device may be one or more of a subscription permanent identifier (subscription permanent identifier, SUPI), a subscription concealed identifier (subscription concealed identifier, SUCI), a mobile subscriber ISDN number (mobile subscriber ISDN number, MSISDN), a permanent equipment identifier (permanent equipment identifier, PEI), a globally unique temporary identifier (globally unique temporary identifier, GUTI), or an online signup identifier of the terminal device, or may be any other identifier that uniquely identifies the terminal device. Optionally, the first core network element may generate the online signup identifier for the terminal device after determining that the online signup authentication of the terminal device succeeds. The first core network element may further send the generated online signup identifier to the terminal device.

Optionally, the first message may further include the user group identifier or the network identifier of the terminal device. The first message further indicates the second core network element to set the user group identifier as an allowed user group identifier in the subscription data of the terminal device, or to set a user group identifier corresponding to the network identifier as an allowed user group identifier in the subscription data of the terminal device. For example, if the first core network element identifies, by using the user group identifier, that the terminal device needs to perform online signup, the first message may further include the user group identifier of the terminal device, and the second core network element may perform corresponding processing on the subscription data of the terminal device based on the user group identifier.

In the examples shown in FIG. 4a-1 and FIG. 4a-2 and FIG. 4b-1 and FIG. 4b-2, the first core network element is the AMF, a second core network element is a UDR, and the AMF identifies, based on the user group identifier (for example, a CAG ID) in the registration request message, that the terminal device needs to perform online signup. After determining that online signup authentication of the terminal device succeeds, the AMF may send an online signup request message to the UDR, where the online signup request message carries a SUPI and/or an MSISDN of the terminal device, and the user group identifier (the CAG ID).

In the examples shown in FIG. 5a-1 and FIG. 5a-2 and FIG. 5b-1 and FIG. 5b-2, the first core network element is the AMF, the second core network element is a UDR, and the AMF identifies, based on the online signup indication (for example, the OSU indication) in the registration request message, that the terminal needs to perform online signup. After determining that the online signup authentication of the terminal device succeeds, the AMF may generate an online signup identifier for the terminal device, and then send an online signup request message to the UDR, where the online signup request message carries the online signup identifier of the terminal device.

If the online signup authentication of the terminal device fails, the first core network element may send a fourth message to the terminal device through the access network device, where the fourth message is used to reject a request of the second message. The fourth message may be a registration reject (registration reject) message, or may have another name. This is not limited in this application.

Step S304: The second core network element receives the first message from the first core network element, where the first message may be the online signup request message.

Step S305: The second core network element generates or updates the network subscription of the terminal device.

In this embodiment of this application, after receiving the first message, the second core network element may generate or update the network subscription for the terminal device, where the network subscription is a subscription generated by the NPN for the terminal device, and includes some subscription data. That the second core network element generates or updates the network subscription of the terminal device may be: The second core network element generates or updates the network subscription of the terminal device; or the second core network element sends, to an operation network element, a request for generating or updating the network subscription of the terminal device, and receives, from the operation network element, the generated or updated network subscription of the terminal device. This is not limited in this application.

Specifically, that the second core network element generates or updates the network subscription of the terminal device may include: The second core network element adds, to the subscription data of the terminal device, a data network name (data network name, DNN) and/or network slice selection assistance information (network slice selection assistance information, NSSAI) that are/is available to the terminal device. The second core network element may generate, based on one or more of the user group identifier (for example, the CAG ID), an identifier (for example, the SUPI), or the network identifier of the terminal device, the DNN and/or the NSSAI that are/is available to the terminal device.

In a possible design, the first message may further include the user group identifier or the network identifier of the terminal device, and that the second core network element generates or updates the network subscription of the terminal device may further include: The second core network element sets the user group identifier as the allowed user group identifier in the subscription data of the terminal device, or sets the user group identifier corresponding to the network identifier as the allowed user group identifier in the subscription data of the terminal device.

For example, the first core network element identifies, based on the user group identifier (for example, the CAG ID) in the registration request message, that the terminal device needs to perform online signup, and the first core network element may send, to the second core network element by using the first message, the user group identifier of the terminal device obtained from the registration request message. Correspondingly, when generating or updating the network subscription of the terminal device, the second core network element may set the user group identifier as the allowed user group identifier in the subscription data of the terminal device.

For another example, the first core network element identifies, based on the network identifier in the registration request message, that the terminal device needs to perform online signup, and the first core network element may send, to the second core network element by using the first message, the network identifier of the terminal device obtained from the registration request message. Correspondingly, when generating or updating the network subscription of the terminal device, the second core network element may further set the network identifier as the allowed user group identifier in the subscription data of the terminal device.

Optionally, if the first core network element identifies, based on the online signup indication (for example, the OSU indication) in the registration request message, that the terminal needs to perform online signup, and generates the online signup identifier for the terminal device, the first core network element may alternatively send the online signup identifier of the terminal device to the second core network element by using the first message. Correspondingly, when generating or updating the network subscription of the terminal device, the second core network element may alternatively add the online signup identifier to the subscription data of the terminal device, and bind the network subscription generated for the terminal device to the online signup identifier of the terminal device.

Optionally, the second core network element may alternatively generate the online signup identifier for the terminal device, and add the generated online signup identifier to the subscription data of the terminal device. In other words, the online signup identifier of the terminal device may be generated by the first core network element, or may be generated by the second core network element.

Further, after generating or updating the network subscription of the terminal device, the second core network element may further send a fifth message to the first core network element, where the fifth message is used to respond to the first message sent by the first core network element. The fifth message may be an online signup response (online signup response) message, or may have another name. This is not limited in this application.

Then, the first core network element may receive the fifth message from the second core network element, and send a sixth message to an online signup device. The sixth message includes a second identifier of the terminal device, and is used to notify the online signup device of the online signup authentication result of the terminal device. The sixth message may be an online signup announcement (online signup announcement) message, or may have another name. This is not limited in this application. The second identifier of the terminal device may be one or more of the SUPI, the SUCI, the MSISDN, or the online signup identifier of the terminal device, and the first identifier and the second identifier of the terminal device may be the same or different. This is also not limited in this application.

The online signup device may receive the sixth message, determine, based on the sixth message, that the online signup authentication of the terminal device succeeds, and generate a user context for the terminal device. After generating the user context of the terminal device, the online signup device may send a seventh message to the first core network element, where the seventh message is used to respond to the sixth message sent by the first core network element. The seventh message may be an online signup announcement response (online signup announcement response) message, or may have another name. This is not limited in this application.

After receiving the seventh message, the first core network element may send a third message to the terminal device through the access network device, where the third message is used to accept the request of the second message. A registration process of the terminal device ends at this point, the network subscription of the terminal device is generated or updated in the NPN, and the user context of the terminal device is generated in an enterprise network. The third message may be a registration accept (registration accept) message, or may have another name. This is not limited in this application. The third message may further include an IP address of the online signup device, so that the terminal device subsequently establishes a connection to the online signup device and obtains the generated user context. The IP address of the online signup device may be pre-configured in the first core network element, or may be obtained by the first core network element in another manner. This is not limited in this application.

It should be understood that, in this embodiment of this application, if the first core network element performs online signup authentication on the terminal device through the online signup authentication device, after receiving the fifth message from the second core network element, the first core network element may alternatively directly send the third message to the terminal device through the access network device. This may also be understood as follows: When the first core network element performs online signup authentication on the terminal device through the online signup authentication device, the actions of sending the sixth message (namely, the online signup announcement message) to the online signup device by the first core network element and receiving the seventh message (namely, the online signup announcement response message) from the online signup device by the first core network element are optional or may be performed after the first core network device sends the third message to the terminal device through the access network device. This is because: In this case, the online signup device may directly obtain the online signup authentication result of the terminal device, and may generate the user context for the terminal device after determining that the online signup authentication of the terminal device succeeds.

For example, in the example shown in FIG. 4a-1 and FIG. 4a-2, the first core network element is the AMF, the second core network element is the UDR, the AMF identifies, based on the user group identifier (for example, the CAG ID) in the registration request message, that the terminal device needs to perform online signup, and the AMF performs online signup authentication on the terminal device through the AUSF. After determining that the online signup authentication of the terminal device succeeds, the AMF may send the online signup request message to the UDR, where the online signup request message includes the user group identifier (for example, the CAG ID) and an identifier (for example, the SUPI and/or the MSISDN) of the terminal device. Therefore, after receiving the online signup request message, the UDR may generate or update a network subscription of the terminal device, and then send an online signup response message to the AMF. After receiving the online signup response message, the AMF may obtain the generated or updated network subscription of the terminal device from the UDR. Then, the AMF may send an online signup announcement message to an online signup device, where the online signup announcement message is used to notify the online signup device that the online signup authentication of the terminal device succeeds. The online signup announcement message also includes an identifier (for example, the SUPI or the MSISDN) of the terminal device. However, the identifier of the terminal device in the online signup announcement message may be the same as or different from the identifier of the terminal device in the online signup request message. For example, the online signup request message includes the SUPI of the terminal device, and the online signup announcement message also includes the SUPI of the terminal device. Alternatively, the online signup request message includes the SUPI of the terminal device, and the online signup announcement message includes the MSISDN of the terminal device. After receiving the online signup announcement message, the online signup device may generate a user context of the terminal device, and send an online signup announcement response message to the AMF. Further, the AMF may send a registration accept message to the terminal device through the access network device, where the registration accept message includes an IP address of the online signup device, and the IP address is used by the terminal device to obtain the user context from the online signup device.

A procedure of the example shown in FIG. 4b-1 and FIG. 4b-2 is roughly similar to the procedure of the example shown in FIG. 4a-1 and FIG. 4a-2. In both the procedures, the AMF identifies, based on the user group identifier (for example, the CAG ID) in the registration request message, that the online signup authentication needs to be performed on the terminal device. However, a difference lies in that in the example shown in FIG. 4b-1 and FIG. 4b-2, after identifying that the terminal device needs to perform online signup, the AMF performs online signup authentication on the terminal device through an online signup device. After receiving an online signup response message from the UDR, and obtaining, from the UDR, a network subscription generated or updated for the terminal device, the AMF may send a registration accept message to the terminal device through the access network device. After sending the registration accept message to the terminal device, the AMF may send an online signup announcement message to an online signup device, to trigger the online signup device to generate a user context for the terminal device. The AMF may further receive an online signup announcement response message sent by the online signup device after the online signup device generates the user context. It should be noted that it is optional for the AMF to send the online signup announcement message to the online signup device and receive the online signup announcement response message from the online signup device. After determining that the online signup authentication of the terminal device succeeds, the online signup device may directly generate the user context for the terminal device, and the AMF does not need to send the online signup announcement message.

A procedure of the example shown in FIG. 5a-1 and FIG. 5a-2 is also similar to the procedure of the example shown in FIG. 4a-1 and FIG. 4a-2. However, a difference lies in that in the example shown in FIG. 5a-1 and FIG. 5a-2, the AMF identifies, based on the online signup indication (for example, the OSU indication) in the registration request message, that the terminal device needs to perform online signup. After determining that the online signup authentication of the terminal device succeeds, the AMF may generate the online signup identifier for the terminal device. In addition, both the online signup request message sent by the AMF to the UDR and an online signup announcement message sent by the AMF to an online signup device include the online signup identifier generated for the terminal device.

The example shown in FIG. 5b-1 and FIG. 5b-2 is the same as the example shown in FIG. 5a-1 and FIG. 5a-2. In both the examples, the AMF identifies, based on the online signup indication (for example, the OSU indication) in the registration request message, that the terminal device needs to perform online signup. However, a difference lies in that in the example shown in FIG. 5b-1 and FIG. 5b-2, after identifying that the terminal device needs to perform online signup, the AMF performs online signup authentication on the terminal device through an online signup device.

It should be noted that, in this embodiment of this application, the second core network element may alternatively receive the first message from the online signup device, and generate or update the network subscription of the terminal device based on the first message received from the online signup device. If the second core network element receives the first message from the online signup device, the first message may further include a credential (credential) allocated by the online signup device or the online signup authentication device to the terminal device in addition to the first identifier and the user group identifier of the terminal device. Before generating or updating the network subscription of the terminal device, the second core network element may perform authentication on the terminal device based on the credential. Correspondingly, that the second core network element generates or updates the network subscription of the terminal device may further include: The second core network element adds, to the subscription data of the terminal device, the credential allocated by the online signup device or the online signup authentication device to the terminal device.

If the second core network element receives the first message from the online signup device, the online signup device may generate the user context of the terminal device before sending the first message to the second core network element. Optionally, the online signup device may allocate the credential to the terminal device in a process of generating the user context of the terminal device.

In a possible implementation, after determining that the online signup authentication of the terminal device succeeds, the first core network element sends the sixth message (namely, the online signup announcement message) to the online signup device. After receiving the sixth message, the online signup device may generate the user context of the terminal device, and send the seventh message (namely, the online signup announcement response message) to the first core network element. Subsequently, the online signup device may send the first message to the second core network element, to trigger the second core network element to generate or update the network subscription of the terminal device.

In another possible implementation, when the first core network element performs online signup authentication on the terminal device through the online signup device, it may also be optional for the first core network element to send the sixth message (namely, the online signup announcement message) to the online signup device and receive the seventh message (namely, the online signup announcement response message) from the online signup device. In other words, after determining that the online signup authentication of the terminal device succeeds, the online signup device may directly generate the user context of the terminal device and then send the first message to the second core network element, without being triggered, after receiving the sixth message sent by the first core network element, to generate the user context of the terminal device.

For example, in an example shown in FIG. 6a-1 and FIG. 6a-2, an AMF performs online signup authentication on a terminal device through an AUSF, and may send an online signup announcement message to an online signup device after determining that the online signup authentication of the terminal device succeeds, where the online signup announcement message includes an identifier (for example, a SUPI or an MSISDN) of the terminal device, and is used to notify the online signup device that the online signup authentication of the terminal device succeeds. Therefore, after receiving the online signup announcement message, the online signup device may generate a user context of the terminal device, and then send an online signup announcement response message to the AMF Subsequently, the online signup device may send an online signup request message to a UDR, where the online signup request message includes a user group identifier (for example, a CAG ID), an identifier (for example, the SUPI or the MSISDN) of the terminal device, and a credential (credential) allocated by the online signup device to the terminal device. After receiving the online signup request message, the UDR may first verify the credential of the terminal device, generate or update a network subscription for the terminal device after the verification succeeds, and then send an online signup response message to the online signup device. Then, the AMF may obtain the network subscription of the terminal device from the UDR, and send a registration accept message to the terminal device through an access network device, where the registration accept message includes an IP address of the online signup device, and the IP address is used by the terminal device to obtain the user context from the online signup device.

In an example shown in FIG. 6b-1 and FIG. 6b-2, an AMF performs online signup authentication on a terminal device through an online signup authentication device. After the AMF determines that the online signup authentication of the terminal device succeeds, it is optional for the AMF to send an online signup announcement message to an online signup device and receive an online signup announcement response message from the online signup device. In other words, after determining that the online signup authentication of the terminal device succeeds, the online signup device may directly generate a user context of the terminal device without waiting to receive the online signup announcement message sent by the AMF, and send an online signup request message to a UDR. A subsequent procedure in the example shown in FIG. 6b-1 and FIG. 6b-2 is the same as the subsequent procedure in the example shown in FIG. 6a-1 and FIG. 6a-2, and details are not described herein again.

Step S306: The second core network element sends a signup announcement message to a third core network element, where the signup announcement message includes one or more of the following information added to the subscription data of the terminal device: the data network name DNN or the network slice selection assistance information NSSAI that is available to the terminal device, and the user group identifier.

In this embodiment of this application, after generating or updating the network subscription of the terminal device, the second core network element may send the signup announcement message to the third core network element, where the signup announcement message is used to notify the generation or update of the network subscription of the terminal device. The signup announcement message may also be referred to as a subscription generation message or a subscription update message, or may have another name. This is not limited in this application.

The signup announcement message includes a third identifier of the terminal device, where the third identifier may be one or more of the SUPI, the SUCI, the MSISDN, or the online signup identifier of the terminal device. The third identifier may be the same as or different from the first identifier or the second identifier. This is not limited in this application.

It should be noted that the data network name DNN and/or the network slice selection assistance information NSSAI that are/is available to the terminal device and that are/is included in the signup announcement message are/is a data network name DNN and/or network slice selection assistance information NSSAI associated with the user group identifier. In other words, there is an association relationship between the user group identifier and the data network name DNN and/or the network slice selection assistance information NSSAI. This may alternatively be understood as: The user group identifier corresponds to some applications, and data of these applications may be transmitted by using a network or a network slice represented by the associated data network name DNN and/or the associated network slice selection assistance information NSSAI, to be specific, the data network name DNN and/or the network slice selection assistance information NSSAI are/is a data network name DNN and/or network slice selection assistance information NSSAI that are/is available to a terminal device in a user group identified by the user group identifier.

In view of this, in a possible implementation, the signup announcement message may include the third identifier of the terminal device and the data network name DNN and/or the network slice selection assistance information NSSAI that are/is available to the terminal device. Alternatively, in another possible implementation, the signup announcement message may include the third identifier of the terminal device and the user group identifier, and the third core network device determines, based on the association relationship that is obtained from the second core network element and that is between a user group identifier (or an application identifier) and a data network name DNN and/or network slice selection assistance information NSSAI, the data network name DNN and/or the network slice selection assistance information NSSAI that are/is available to the terminal device. Alternatively, in another possible implementation, the signup announcement message may include the third identifier of the terminal device, the user group identifier, and the available data network name DNN and/or the available network slice selection assistance information NSSAI.

Step S307: The third core network element receives the signup announcement message.

Step S308: The third core network element generates or updates a terminal device route selection policy (UE route selection policy, URSP) of the terminal device based on the signup announcement message.

The terminal device route selection policy URSP includes one or more of the following information added to the subscription data of the terminal device: the data network name DNN or the network slice selection assistance information NSSAI that is available to the terminal device, and the user group identifier.

Optionally, the URSP may further include an identifier of an application available to the terminal device and an association relationship between the available application and one or more of the DNN, the NSSAI, or the user group identifier.

Step S309: The third core network element sends the generated or updated URSP of the terminal device to the terminal device.

Step S310: The terminal device receives the terminal device route selection policy URSP from the third core network element.

Step S311: The terminal device accesses a network according to the received URSP, where the network may be the enterprise network.

Specifically, as shown in FIG. 8, the terminal device may initiate a protocol data unit (protocol data unit, PDU) session establishment process based on the available data network name DNN and/or the available network slice selection assistance information NSSAI that are/is obtained from the URSP, to connect to the enterprise network. For example, based on a currently used application and the association relationship between the application and one or more of the DNN, the NSSAI, or the user group identifier, the terminal device uses a DNN, NSSAI, and the user group identifier that are associated with the currently used application to access the network.

Further, the terminal device may establish the connection to the online signup device based on the IP address of the online signup device that is obtained from the registration accept message in the registration process, and obtain the user context generated by the online signup device. The terminal device may further obtain the generated or updated network subscription from the first core network element, and obtain the online signup identifier from the first core network element or the second core network element. Details are not described herein in this application.

In this way, according to step S306 to step S311 described above, the terminal device may obtain the generated or updated network subscription and URSP, and access the enterprise network.

For example, in an example shown in FIG. 7, after generating a network subscription of a terminal device, a UDR may send a subscription update (subscription update) message to a PCF, where the subscription update message includes an identifier (for example, a SUPI or an MSISDN) of the terminal device and a user group identifier (for example, a CAG ID), or may include an identifier (for example, a SUPI or an MSISDN) of the terminal device and a DNN and/or NSSAI that are/is available to the terminal device. After receiving the subscription update message, the PCF may determine to update a URSP of the terminal device. Then, the PCF may send the updated URSP to the terminal device through an AMF and an access network device. After receiving the updated URSP, the terminal device may send a response message to the PCF.

### Embodiment 2

An embodiment of this application further provides another online signup method. Different manners of performing online signup authentication on a terminal device are a main difference between the online signup method in Embodiment 2 and the online signup method in Embodiment 1. Alternatively, the online signup authentication manner in Embodiment 2 may be understood as another specific implementation of step S302 in Embodiment 1.

FIG. 9A to FIG. 9C are a schematic flowchart of another online signup method according to this embodiment of this application. The method specifically includes the following steps.

Step S901: A first core network element identifies that a terminal device needs to perform online signup.

In this embodiment of this application, a specific implementation of step S901 may be the same as that of step S301, and details are not described herein again.

Step S902: The first core network element sends first information to the terminal device, where the first information indicates the terminal device to establish a connection to an online signup authentication device; and performs online signup authentication through the online signup authentication device.

The first information may include an IP address of the online signup authentication device and a DNN and/or NSSAI that are/is available to the terminal device. The IP address of the online signup authentication device is used by the terminal device to subsequently establish the connection to the online signup authentication device, and is used to perform online signup authentication. The DNN and/or the NSSAI are/is used by the terminal device to establish a PDU session that can connect the terminal device to an enterprise network.

In this embodiment of this application, when a registration process is completed, the first core network element may include the first information in a registration accept (registration accept) message to be sent to the terminal device, where the registration accept message may further include an IP address of an online signup device, and the IP address is used by the terminal device to obtain a user context.

In this way, according to the foregoing steps S901 and S902, in the registration process, the first core network element may only identify that the terminal device needs to perform online signup, and indicate the terminal device to subsequently establish the connection to the online signup authentication device. A specific process in which the online signup authentication device performs online signup authentication on the terminal device may be performed on a user plane.

Step S903: The terminal device establishes, based on the DNN and/or the NSSAI in the first information, the PDU session that can connect the terminal device to the enterprise network.

Step S904: The terminal device establishes the connection to the online signup authentication device based on the IP address of the online signup authentication device in the first information, and the online signup authentication device performs online signup authentication on the terminal device.

Similar to the online signup authentication in Embodiment 1, the online signup authentication herein may be credential-based device authentication (for example, EAP-TLS), may be user name and password-based authentication (for example, EAP-TTLS), or may be other authentication. This is not limited in this application.

Step S905: If the online signup authentication of the terminal device succeeds, the online signup authentication device may send an eighth message to the online signup device, where the eighth message may include an identifier (for example, one or more of a SUPI, a SUCI, an MSISDN, a GUTI, or a PEI) of the terminal device, and is used to notify the online signup device that the online signup authentication of the terminal device succeeds.

Step S906: After determining that the online signup authentication of the terminal device succeeds, the online signup device generates the user context of the terminal device.

Optionally, the online signup device may further allocate a credential to the terminal device, so that a second core network element verifies an identity of the terminal device before generating or updating a network subscription of the terminal device.

Step S907: The online signup device sends the generated user context to the terminal device.

Step S908: The online signup device sends a first message to the second core network element, where the first message includes a first identifier of the terminal device, and is used to request the second core network element to generate or update the network subscription of the terminal device.

The first message may be an online signup request (online signup request) message, or may have another name. This is not limited in this application. The first identifier of the terminal device may be one or more of the SUPI, the SUCI, the MSISDN, the GUTI, or the PEI, or may be any other identifier that uniquely identifies the terminal device. The first message may further include a user group identifier (for example, a CAG ID) of the terminal device and/or the credential generated by the online signup device for the terminal device.

Step S909: The second core network element generates or updates the network subscription of the terminal device.

A specific implementation of step S909 may be the same as that of S305, and details are not described herein again.

Step S910: After generating or updating the network subscription of the terminal device, the second core network element sends a fifth message to an online authentication device, where the fifth message is used to respond to the first message sent by the online signup device. The fifth message may be an online signup response (online signup response) message, or may have another name. This is not limited in this application.

In this way, the first core network element may obtain the generated or updated network subscription of the terminal device from the second core network element.

In this embodiment of this application, after generating or updating the network subscription of the terminal device, the second core network element may further send a signup announcement message to a third core network element, to trigger a URSP update process as shown in step S306 to step S308.

In step S904, if the online signup authentication of the terminal device fails, the online signup authentication device may send a ninth message to the first core network element, where the ninth message includes an identifier (for example, one or more of the SUPI, the SUCI, or the MSISDN) of the terminal device, and is used to notify the first core network element that the online signup authentication of the terminal device fails. After receiving the ninth message, the AMF may initiate a deregistration process.

It should be noted that if the online signup authentication of the terminal device succeeds, the online signup authentication device may also send the eighth message to the first core network element, to notify the first core network element that the online signup authentication of the terminal device succeeds. In this way, the first core network element may send the first message (namely, the online signup request message) to the second core network element in the manner shown in step S303, to request the second core network device to generate or update the network subscription of the terminal device. Correspondingly, the second core network device also sends the fifth message (namely, the online signup response message) to the first core network device.

FIG. 10A and FIG. 10B show an example of the registration process of the terminal device in Embodiment 2. In FIG. 10A and FIG. 10B, a first core network element is an AMF, a second core network element is a UDR, an online signup device is an OSU server, and online signup authentication is an OSU AAA server. As shown in FIG. 10A and FIG. 10B, a registration process specifically includes the following steps: Step 1001: A terminal device sends a registration request message to an access network device (namely, a RAN shown in the figure), where the registration request message includes a user group identifier of the terminal device, namely, a CAG ID in the figure Step 1002: The access network device selects the AMF, and then forwards the registration request message to the corresponding AMF in step 1003. Step S1004: After receiving the registration request message, the AMF selects an AUSF. Step S1005: The AMF performs SIM card authentication on the terminal device through the selected AUSF. Step S1006: The AMF identifies that the terminal device needs to perform online signup. In this step, that the AMF identifies that the terminal device needs to perform online signup may be: The AMF determines that the user group identifier is not allowed, that is, the AMF considers that the user group identifier does not belong to a user group corresponding to the user group identifier. Step S1007: The AMF selects a UDM, and obtains an initial subscription of the terminal device through the selected UDM in step S1008. Step S1009: The AMF selects a PCF, and obtains a session management policy of the terminal device through the selected PCF in step S1010. Step S1010: The AMF sends the obtained session management policy of the terminal device to an SMF. Step S1011: The AMF sends a registration accept message to the terminal device through the access network device, and the registration process ends. The registration accept message includes an IP address of the OSU server, an IP address of the OSU AAA server, or a DNN and/or NSSAI.

FIG. 11A and FIG. 11B show an example of a process of generating or updating the network subscription of the terminal device in Embodiment 2. In FIG. 11A and FIG. 11B, a first core network element is an AMF, a second core network element is a UDR, an online signup device is an OSU server, and online signup authentication is an OSU AAA server. This is the same as the case in FIG. 10A and FIG. 10B. As shown in FIG. 11A and FIG. 11B, generating or updating network subscription of a terminal device specifically includes the following steps: Step S1101: The terminal device establishes, based on a DNN and/or NSSAI that are/is obtained from a registration accept message, a PDU session that can connect the terminal device to an enterprise network. Step S1102: The terminal device establishes a connection to the OSU AAA server based on an IP address of the OSU AAA server that is obtained from the registration accept message, and the OSU AAA server performs online signup authentication on the terminal device. Step S1103 and step S1104: If the online signup authentication of the terminal device fails, the OSU AAA server sends indication information to the AMF to indicate that the online signup authentication of the terminal device fails. Step S1105: The AMF initiates a deregistration process. Step S1106 and step S1107: If the online signup authentication of the terminal device succeeds, the OSU AAA server sends an online signup authentication result of the terminal device to the OSU server, to notify the OSU server that the online signup authentication of the terminal device succeeds. Step S1108: The OSU server generates a user context of the terminal device. Optionally, the OSU server may further allocate a credential (credential) to the terminal device in this step. Step S1109: The OSU server sends the generated user context to the terminal device. Step S1110: The OSU server sends an online signup request message to the UDR through a NEF, where the online signup request message includes an identifier (for example, an MSISDN) of the terminal device, a user group identifier CAG ID, and the credential (credential) allocated by the OSU server to the terminal device. Step 1111: The UDR generates or updates a network subscription of the terminal device. Step S1112: The UDR sends an online signup response message to the OSU server through the NEF. A process of generating or updating the network subscription of the terminal device ends at this point.

FIG. 12a shows an example of a process of establishing a PDU session by a terminal device according to an embodiment of this application. The process may be a specific implementation of step S1101 in FIG. 11A and FIG. 11B. As shown in FIG. 12a, the process of establishing the PDU session may include the following steps: Step S1201: Perform a registration process. This means that the PDU session is established after the registration process shown in FIG. 10A and FIG. 10B. Step S1202: A terminal device sends a PDU session establishment request to an AMF, where the PDU session establishment request includes an identifier of the terminal device. Optionally, the PDU session establishment request may further include an online signup indication, and the AMF may identify, in this step, that the terminal device needs to perform online signup. Step S1203: The AMF selects an SMF, and then forwards the received PDU session establishment request to the selected SMF in step S1204. Optionally, the AMF may consider the online signup indication when selecting the SMF. Step S1205: The AMF obtains session subscription information of the terminal device from a UDM. Step S1206: Perform session-granularity authentication and authorization. Step S1207: The SMF selects a PCF and a UPF. Step S1208: Perform session policy authorization. Step S1209: The SMF sends an N4 session establishment request message to the UPF, where the N4 session establishment request message includes IP filters (IP filters), and the IP filters are used to limit data sending performed by the terminal device, in other words, only IP data in an online signup process is allowed to be transmitted on the currently established PDU session. Step S1210: The UPF sends an N4 session establishment response message to the SMF. Step S1211: The SMF performs resource configuration for an access network and the terminal device.

FIG. 12b shows an example of another process of establishing a PDU session by a terminal device according to an embodiment of this application. A difference between this process and the PDU session establishment process shown in FIG. 12a lies in: In this process, online signup authentication may be performed on the terminal device during session-granularity authentication and authorization shown in step S1205. In this way, after the PDU session is established, step S 1102 may be omitted in the process of generating or updating the network subscription of the terminal device in FIG. 11A and FIG. 11B. In other words, an OSU AAA server does not need to perform online signup authentication on the terminal device after the PDU session is established.

An embodiment of this application provides a communication apparatus. FIG. 13 is a schematic diagram of a structure of a communication apparatus according to this embodiment of this application. The communication apparatus 1300 includes a transceiver module 1310 and a processing module 1320. The communication apparatus may be configured to implement a function of the first core network element in any one of the foregoing method embodiments, a function of the second core network element in any one of the foregoing method embodiments, or a function of the third core network element in any one of the foregoing method embodiments. For example, the communication apparatus may be an AMF network element or an SMF network element in a core network, or may be a UDR network element, a UDM network element, or a PCF network element. The network element or network function may be a network element in a hardware device, a software function running on dedicated hardware, or a virtualized function instantiated on a platform (for example, a cloud platform).

The communication apparatus 1300 may serve as a first core network element, and perform steps performed by the first core network element in the foregoing method embodiments. The transceiver module 1310 may be configured to support the communication apparatus 1300 in communication, for example, perform sending and/or receiving actions performed by the first core network element in FIG. 3A and FIG. 3B and FIG. 9A to FIG. 9C, or perform sending and/or receiving actions performed by the AMF in FIG. 4a-1 and FIG. 4a-2, FIG. 4b-1 and FIG. 4b-2, FIG. 5a-1 and FIG. 5a-2, FIG. 5b-1 and FIG. 5b-2, FIG. 6a-1 and FIG. 6a-2, FIG. 6b-1 and FIG. 6b-2, FIG. 7, FIG. 8, FIG. 10A and FIG. 10B, FIG. 11A and FIG. 11B, FIG. 12a, and FIG. 12b. The processing module 1320 may be configured to support the communication apparatus 1300 to perform processing actions in the foregoing method embodiments, for example, perform processing actions performed by the first core network element in FIG. 3A and FIG. 3B and FIG. 9A to FIG. 9C, or perform processing actions performed by the AMF in FIG. 4a-1 and FIG. 4a-2, FIG. 4b-1 and FIG. 4b-2, FIG. 5a-1 and FIG. 5a-2, FIG. 5b-1 and FIG. 5b-2, FIG. 6a-1 and FIG. 6a-2, FIG. 6b-1 and FIG. 6b-2, FIG. 7, FIG. 8, FIG. 10A and FIG. 10B, FIG. 11A and FIG. 11B, FIG. 12a, and FIG. 12b. Optionally, the communication apparatus 1300 may further include a storage module 1330 (not shown in FIG. 13), configured to store program code and data of the communication apparatus 1300. Specifically, refer to the following descriptions:

The processing module 1320 is configured to identify that a terminal device needs to perform online signup, and trigger online signup authentication of the terminal device. The transceiver module 1310 is configured to: if the online signup authentication of the terminal device succeeds, send a first message to a second core network element, where the first message includes a first identifier of the terminal device, and is used to request the second core network element to generate or update a network subscription of the terminal device.

In a possible design, the transceiver module 1310 is further configured to receive a second message from the terminal device or an access network device, where the second message includes a user group identifier or a network identifier. The processing module 1320 is specifically configured to: if determining that the terminal device does not belong to a user group corresponding to the user group identifier, or does not belong to a user group corresponding to the network identifier, identify that the terminal device needs to perform online signup.

In a possible design, the transceiver module 1310 is further configured to receive a second message from the terminal device or an access network device, where the second message includes an online signup indication. The processing module 1320 is specifically configured to identify, based on the online signup indication, that the terminal device needs to perform online signup.

In a possible design, the online signup authentication is a process of performing authentication on identity information provided by the terminal device. The processing module 1320 is specifically configured to send an authentication message to an authentication server function network element through the transceiver module 1310, to trigger the authentication server function network element to perform online signup authentication on the terminal device. Alternatively, the processing module 1320 is specifically configured to send an authentication message to an online signup authentication device through the transceiver module 1310, to trigger the online signup authentication device to perform online signup authentication on the terminal device. Alternatively, the processing module 1320 is specifically configured to: send first information to the terminal device through the transceiver module 1310, where the first information indicates the terminal device to establish a connection to an online signup authentication device; and perform online signup authentication through the online signup authentication device.

In a possible design, the first information may include one or more of an IP address of the online signup authentication device, a data network name DNN, or network slice selection assistance information NSSAI.

In a possible design, the processing module 1320 is further configured to: if the online signup authentication of the terminal device succeeds, generate an online signup identifier for the terminal device, and send the online signup identifier to the terminal device through the transceiver module 1310.

In a possible design, the first message further includes the user group identifier or the network identifier. The first message further indicates the second core network element to set the user group identifier as an allowed user group identifier in subscription data of the terminal device, or to set a user group identifier corresponding to the network identifier as an allowed user group identifier in subscription data of the terminal device.

In a possible design, the transceiver module 1310 is further configured to receive the network subscription of the terminal device from the second core network element, where the network subscription may include one or more of the following information: a data network name or network slice selection assistance information NSSAI that is available to the terminal device, and the user group identifier.

In a possible design, the transceiver module 1310 is further configured to send an online signup announcement message to an online signup device, where the online signup announcement message includes a second identifier of the terminal device, and is used to notify the online signup device of an online signup authentication result of the terminal device.

In a possible design, the transceiver module 1310 is further configured to send a third message to the terminal device, where the third message includes an IP address of the online signup device, and the IP address of the online signup device is used by the terminal device to obtain, from the online signup device, a user context generated or updated for the terminal device.

In a possible design, the transceiver module 1310 is further configured to: if the online signup authentication of the terminal device fails, send a fourth message to the terminal device, where the fourth message is used to reject a request of the second message.

The communication apparatus 1300 may alternatively serve as a second core network element, and perform steps performed by the second core network element in the foregoing method embodiments. The transceiver module 1310 may be configured to support the communication apparatus 1300 in communication, for example, perform sending and/or receiving actions performed by the second core network element in FIG. 3A and FIG. 3B and FIG. 9A to FIG. 9C, or perform sending and/or receiving actions performed by the UDR in FIG. 4a-1 and FIG. 4a-2, FIG. 4b-1 and FIG. 4b-2, FIG. 5a-1 and FIG. 5a-2, FIG. 5b-1 and FIG. 5b-2, FIG. 6a-1 and FIG. 6a-2, FIG. 6b-1 and FIG. 6b-2, FIG. 7, FIG. 10A and FIG. 10B, and FIG. 11A and FIG. 11B. The processing module 1320 may be configured to support the communication apparatus 1300 to perform processing actions in the foregoing method embodiments, for example, perform processing actions performed by the second core network element in FIG. 3A and FIG. 3B and FIG. 9A to FIG. 9C, or perform processing actions performed by the UDR in FIG. 4a-1 and FIG. 4a-2, FIG. 4b-1 and FIG. 4b-2, FIG. 5a-1 and FIG. 5a-2, FIG. 5b-1 and FIG. 5b-2, FIG. 6a-1 and FIG. 6a-2, FIG. 6b-1 and FIG. 6b-2, FIG. 7, FIG. 10A and FIG. 10B, and FIG. 11A and FIG. 11B. Optionally, the communication apparatus 1300 may further include a storage module 1330 (not shown in FIG. 13), configured to store program code and data of the communication apparatus 1300. Specifically, refer to the following descriptions:

The transceiver module 1310 is configured to receive a first message from a first core network element or an online signup device, where the first message includes a first identifier of a terminal device, and is used to request the second core network element to generate or update a network subscription of the terminal device. The processing module 1320 is configured to generate or update the network subscription of the terminal device.

In a possible design, the first message further includes a user group identifier or a network identifier. Correspondingly, the processing module 1320 is specifically configured to set the user group identifier as an allowed user group identifier in subscription data of the terminal device, or set a user group identifier corresponding to the network identifier as an allowed user group identifier in subscription data of the terminal device.

In a possible design, the processing module 1320 is further specifically configured to: generate an online signup identifier, and add the online signup identifier to subscription data of the terminal device.

In a possible design, the first message may further include a credential allocated by the online signup device or an online signup authentication device to the terminal device. Correspondingly, the processing module 1320 is further specifically configured to add the credential to the subscription data of the terminal device.

In a possible design, the processing module 1320 is further specifically configured to add, to the subscription data of the terminal device, a data network name DNN and/or network slice selection assistance information NSSAI that are/is available to the terminal device.

In a possible design, the transceiver module 1310 is further configured to send a signup announcement message to a third core network element, where the signup announcement message includes one or more of the following information added to the subscription data of the terminal device: the data network name DNN or the network slice selection assistance information NSSAI that is available to the terminal device, and the user group identifier.

In a possible design, the DNN and/or the NSSAI that are/is included in the signup announcement message are/is a DNN and/or NSSAI associated with the user group identifier.

The communication apparatus 1300 may alternatively serve as a third core network element, and perform steps performed by the third core network element in the foregoing method embodiments. The transceiver module 1310 may be configured to support the communication apparatus 1300 in communication, for example, perform sending and/or receiving actions performed by the third core network element in FIG. 3A and FIG. 3B, or perform sending and/or receiving actions performed by the PCF in FIG. 4a-1 and FIG. 4a-2, FIG. 4b-1 and FIG. 4b-2, FIG. 5a-1 and FIG. 5a-2, FIG. 5b-1 and FIG. 5b-2, FIG. 6a-1 and FIG. 6a-2, FIG. 6b-1 and FIG. 6b-2, FIG. 7, FIG. 8, FIG. 10A and FIG. 10B, FIG. 11A and FIG. 11B, FIG. 12a, and FIG. 12b. The processing module 1320 may be configured to support the communication apparatus 1300 to perform processing actions in the foregoing method embodiments, for example, perform processing actions performed by the third core network element in FIG. 3A and FIG. 3B, or perform processing actions performed by the PCF in FIG. 4a-1 and FIG. 4a-2, FIG. 4b-1 and FIG. 4b-2, FIG. 5a-1 and FIG. 5a-2, FIG. 5b-1 and FIG. 5b-2, FIG. 6a-1 and FIG. 6a-2, FIG. 6b-1 and FIG. 6b-2, FIG. 7, FIG. 8, FIG. 10A and FIG. 10B, FIG. 11A and FIG. 11B, FIG. 12a, and FIG. 12b. Optionally, the communication apparatus 1300 may further include a storage module 1330 (not shown in FIG. 13), configured to store program code and data of the communication apparatus 1300. Specifically, refer to the following descriptions:

The transceiver module 1310 is configured to receive a signup announcement message, where the signup announcement message includes one or more of the following information added to subscription data of a terminal device: a data network name DNN or network slice selection assistance information NSSAI that is available to the terminal device, and a user group identifier. The processing module 1320 is configured to generate or update a terminal device route selection policy URSP of the terminal device based on the signup announcement message, where the URSP may include one or more of the following information added to the subscription data of the terminal device: the data network name DNN or the network slice selection assistance information NSSAI that is available to the terminal device, and the user group identifier. The transceiver module 1310 is further configured to send the URSP to the terminal device.

In a possible design, the URSP further includes an identifier of an application available to the terminal device and an association relationship between the application and one or more of the DNN, the NSSAI, or the user group identifier.

It should be noted that the processing module 1320 in the communication apparatus 1300 may be implemented by a processor or a processor-related circuit component, and may be a processor or a processing unit. The transceiver module 1310 may be implemented by a transceiver or a transceiver-related circuit component, and may be a transceiver or a transceiver unit.

FIG. 14 is a schematic diagram of another structure of a communication apparatus according to an embodiment of this application. The communication apparatus 1400 may be configured to implement the methods described in the foregoing method embodiments. The communication apparatus 1400 may be a chip or a network device.

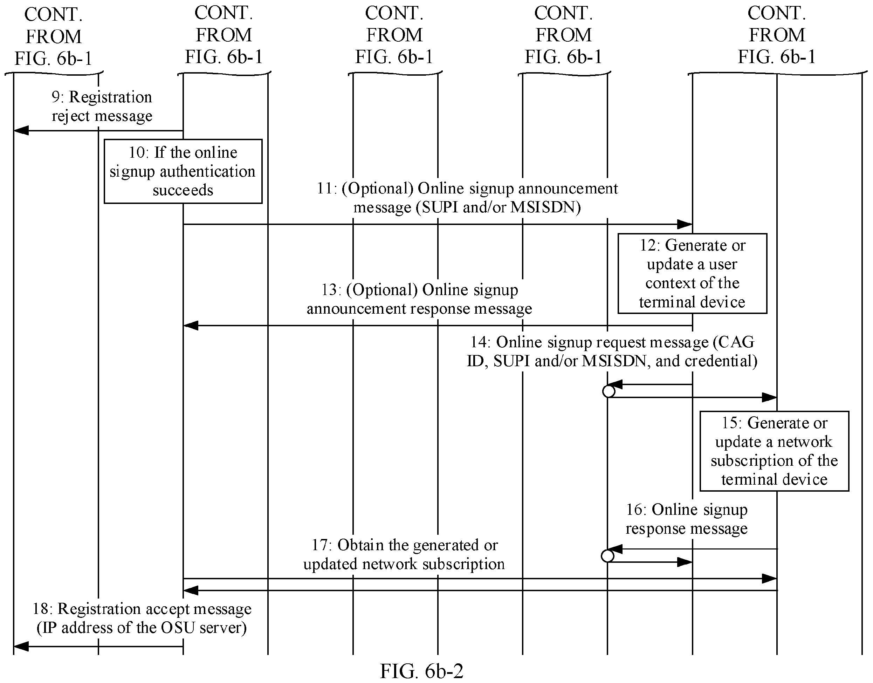

The communication apparatus 1400 includes one or more processors 1401. The one or more processors 1401 may support the communication apparatus 1400 to implement the method performed by the first core network element, the second core network element, or the third core network element in FIG. 3A and FIG. 3B to FIG. 12b. The processor 1401 may be a general-purpose processor or a dedicated processor. For example, the processor 1401 may be a central processing unit (central processing unit, CPU) or a baseband processor. The baseband processor may be configured to process communication data. The CPU may be configured to control the communication apparatus (for example, the network device, a terminal device, or the chip) to execute a software program and process data of the software program. The communication apparatus 1400 may further include a transceiver unit 1405, configured to input (receive) and output (send) a signal.

For example, the communication apparatus 1400 may be the chip. The transceiver unit 1405 may be an input and/or output circuit of the chip, or the transceiver unit 1405 may be a communication interface of the chip. The chip may be used as a component of the terminal device, the network device, or another wireless communication device.

The communication apparatus 1400 may include one or more memories 1402. The memory 1402 stores a program 1404, and the program 1404 may be run by the processor 1401 to generate instructions 1403, so that the processor 1401 performs, according to the instructions 1403, the methods described in the foregoing method embodiments. Optionally, the memory 1402 may further store data. Optionally, the processor 1401 may further read the data stored in the memory 1402. The data and the program 1404 may be stored at a same storage address, or may be stored at different storage addresses.

The processor 1401 and the memory 1402 may be disposed separately, or may be integrated together, for example, integrated on a board or a system on chip (system on chip, SOC).

The communication apparatus 1400 may further include the transceiver unit 1405 and an antenna 1406. The transceiver unit 1405 may be referred to as a transceiver circuit or a transceiver, and is configured to implement sending and receiving functions of the communication apparatus through the antenna 1406.

It should be understood that steps in the foregoing method embodiments may be implemented by using a logic circuit in a form of hardware in the processor 1401 or instructions in a form of software. The processor 1401 may be a CPU, a digital signal processor (digital signal processor, DSP), an application-specific integrated circuit (application-specific integrated circuit, ASIC), a field programmable gate array (field programmable gate array, FPGA), or another programmable logic device, for example, a discrete gate, a transistor logic device, or a discrete hardware component.

An embodiment of this application further provides another communication apparatus. FIG. 15 is a schematic diagram of a structure of another communication apparatus according to an embodiment of this application. The communication apparatus 1500 includes a transceiver module 1510 and a processing module 1520. The communication apparatus may be configured to implement functions of the terminal device in any one of the foregoing method embodiments. For example, the communication apparatus may be a terminal device, for example, a handheld terminal device or a vehicle-mounted terminal device. Alternatively, the communication apparatus may be a chip included in the terminal device or an apparatus including the terminal device, for example, various types of vehicles.

The communication apparatus 1500 may serve as a terminal device, and perform steps performed by the terminal device in the foregoing method embodiments. The transceiver module 1510 may be configured to support the communication apparatus 1500 in communication, for example, perform sending and/or receiving actions performed by the terminal device in FIG. 3A and FIG. 3B and FIG. 9A to FIG. 9C, or perform sending and/or receiving actions performed by the UE in FIG. 4a-1 and FIG. 4a-2, FIG. 4b-1 and FIG. 4b-2, FIG. 5a-1 and FIG. 5a-2, FIG. 5b-1 and FIG. 5b-2, FIG. 6a-1 and FIG. 6a-2, FIG. 6b-1 and FIG. 6b-2, FIG. 7, FIG. 8, FIG. 10A and FIG. 10B, FIG. 11A and FIG. 11B, FIG. 12a, and FIG. 12b. The processing module 1520 may be configured to support the communication apparatus 1500 to perform processing actions in the foregoing method embodiments, for example, perform processing actions performed by the terminal device in FIG. 3A and FIG. 3B and FIG. 9A to FIG. 9C, or perform processing actions performed by the UE in FIG. 4a-1 and FIG. 4a-2, FIG. 4b-1 and FIG. 4b-2, FIG. 5a-1 and FIG. 5a-2, FIG. 5b-1 and FIG. 5b-2, FIG. 6a-1 and FIG. 6a-2, FIG. 6b-1 and FIG. 6b-2, FIG. 7, FIG. 8, FIG. 10A and FIG. 10B, FIG. 11A and FIG. 11B, FIG. 12a, and FIG. 12b. Optionally, the communication apparatus 1500 may further include a storage module 1530 (not shown in FIG. 13), configured to store program code and data of the communication apparatus 1500. Specifically, refer to the following descriptions:

The transceiver module 1510 is configured to receive a terminal device route selection policy URSP from a third core network element, where the URSP includes one or more of the following information added to subscription data of the terminal device: a data network name DNN or network slice selection assistance information NSSAI that is available to the terminal device, and a user group identifier. The processing module 1520 is configured to access a network according to the URSP.

In a possible design, the URSP further includes an identifier of an application available to the terminal device and an association relationship between the application and one or more of the DNN, the NSSAI, or the user group identifier. The processing module 1520 is specifically configured to: based on the association relationship uses a DNN, NSSAI, and the user group identifier that are associated with a currently used application to access the network.

In a possible design, the transceiver module 1510 is further configured to obtain a generated or updated network subscription from a first core network element.

FIG. 16 is a schematic diagram of another structure of another communication apparatus according to an embodiment of this application. The communication apparatus may be specifically a terminal device. For ease of understanding and illustration, in FIG. 16, an example in which the terminal device is a mobile phone is used. As shown in FIG. 16, the terminal device includes a processor, may further include a memory, and certainly, may further include a radio frequency circuit, an antenna, an input/output apparatus, and the like. The processor is mainly configured to: process a communication protocol and communication data, control the terminal device, execute a software program, process data of the software program, and so on. The memory is mainly configured to store the software program and the data. The radio frequency circuit is mainly configured to: perform conversion between a baseband signal and a radio frequency signal, and process the radio frequency signal. The antenna is mainly configured to send and receive the radio frequency signal in an electromagnetic wave form. The input/output apparatus such as a touchscreen, a display screen, or a keyboard is mainly configured to: receive data entered by a user, and output data to the user. It should be noted that terminal devices of some types may have no input/output apparatus.

When data needs to be sent, the processor performs baseband processing on the to-be-sent data, and outputs a baseband signal to the radio frequency circuit. The radio frequency circuit performs radio frequency processing on the baseband signal and then sends a radio frequency signal to the outside in an electromagnetic wave form through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 16. In an actual terminal device product, there may be one or more processors and one or more memories. The memory may also be referred to as a storage medium, a storage device, or the like. The memory may be independent of the processor, or may be integrated with the processor. This is not limited in this embodiment of this application.

In this embodiment of this application, the antenna and the radio frequency circuit that have sending and receiving functions may be considered as a transceiver unit of the terminal device, and the processor that has a processing function may be considered as a processing unit of the terminal device. As shown in FIG. 16, the terminal device includes a transceiver unit 1610 and a processing unit 1620. The transceiver unit may also be referred to as a transceiver, a transceiver apparatus, or the like. The processing unit may also be referred to as a processor, a processing board, a processing module, a processing apparatus, or the like. Optionally, a component that is in the transceiver unit 1610 and that is configured to implement the receiving function may be considered as a receiving unit, and a component that is in the transceiver unit 1610 and that is configured to implement the sending function may be considered as a sending unit. In other words, the transceiver unit 1610 includes the receiving unit and the sending unit. The transceiver unit may also be sometimes referred to as a transceiver, a transceiver circuit, or the like. The receiving unit may also be sometimes referred to as a receiver, a receiver circuit, or the like. The sending unit may also be sometimes referred to as a transmitter, a transmitter circuit, or the like. It should be understood that the transceiver unit 1610 is configured to perform sending and receiving operations on a terminal device side in the foregoing method embodiments, and the processing unit 1620 is configured to perform an operation other than the sending and receiving operations of the terminal device in the foregoing method embodiments.

An embodiment of this application further provides a chip system, including a processor, where the processor is coupled to a memory. The memory is configured to store a program or instructions. When the program or the instructions is/are executed by the processor, the chip system is enabled to implement the method in any one of the foregoing method embodiments.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be separate from the processor. This is not limited in this application. For example, the memory may be a non-transitory memory for example, a read-only memory ROM. The memory and the processor may be integrated onto a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), or a programmable logic device (programmable logic device, PLD) or another integrated chip.

It should be understood that steps in the foregoing method embodiments may be completed by using a hardware integrated logic circuit in the processor or instructions in a form of software. The steps of the methods according to embodiments of this application may be directly performed and completed by a hardware processor, or may be performed and completed by using a combination of hardware and software modules in the processor.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes a first core network element, a second core network element, and a third core network element. Optionally, the communication system may further include an access network device and a terminal device.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (the storage module) is integrated into the processor.

It should be noted that the memory described in this specification is intended to include but not limited to these memories and any memory of another appropriate type.

It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In several embodiments provided in this application, it should be understood that the disclosed system, apparatus, and method may be implemented in other manners. For example, the described apparatus embodiments are merely examples. For example, the division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An online signup method, comprising:
identifying, by a first core network element, that a terminal device needs to perform online signup;
triggering, by the first core network element, online signup authentication of the terminal device; and
if the online signup authentication of the terminal device succeeds, sending, by the first core network element, a first message to a second core network element, wherein the first message comprises a first identifier of the terminal device, and is used to request the second core network element to generate or update a network subscription of the terminal device.

2. The method according to claim 1, wherein the identifying, by a first core network element, that a terminal device needs to perform online signup comprises:
receiving, by the first core network element, a second message from the terminal device or an access network device, wherein the second message comprises a user group identifier or a network identifier; and
if determining that the terminal device does not belong to a user group corresponding to the user group identifier, or does not belong to a user group corresponding to the network identifier, identifying, by the first core network element, that the terminal device needs to perform online signup.

3. The method according to claim 1 or 2, wherein the online signup authentication is a process of performing authentication on identity information provided by the terminal device; and
the triggering, by the first core network element, online signup authentication of the terminal device comprises:
sending, by the first core network element, an authentication message to an authentication server function network element, to trigger the authentication server function network element to perform online signup authentication on the terminal device;
sending, by the first core network element, an authentication message to an online signup authentication device, to trigger the online signup authentication device to perform online signup authentication on the terminal device; or
sending, by the first core network element, first information to the terminal device, wherein the first information indicates the terminal device to establish a connection to an online signup authentication device; and performing online signup authentication through the online signup authentication device.

4. The method according to claim 3, wherein the first information comprises one or more of an IP address of the online signup authentication device, a data network name DNN, or network slice selection assistance information NSSAI.

5. The method according to any one of claims 1 to 4, wherein the method further comprises:
if the online signup authentication of the terminal device succeeds, generating, by the first core network element, an online signup identifier for the terminal device, and sending the online signup identifier to the terminal device.

6. The method according to any one of claims 1 to 5, wherein the first message further comprises the user group identifier or the network identifier; and
the first message further indicates the second core network element to set the user group identifier as an allowed user group identifier in subscription data of the terminal device, or to set a user group identifier corresponding to the network identifier as an allowed user group identifier in subscription data of the terminal device.

7. The method according to any one of claims 1 to 6, wherein the method further comprises:
sending, by the first core network element, an online signup announcement message to an online signup device, wherein the online signup announcement message comprises a second identifier of the terminal device, and is used to notify the online signup device of an online signup authentication result of the terminal device.

8. The method according to claim 7, wherein the method further comprises:
sending, by the first core network element, a third message to the terminal device, wherein the third message comprises an IP address of the online signup device, and the IP address of the online signup device is used by the terminal device to obtain, from the online signup device, a user context generated or updated for the terminal device.

9. The method according to any one of claims 1 to 8, wherein the method further comprises:
if the online signup authentication of the terminal device fails, sending, by the first core network element, a fourth message to the terminal device, wherein the fourth message is used to reject a request of the second message.

10. An online signup method, comprising:
receiving, by a second core network element, a first message from a first core network element or an online signup device, wherein the first message comprises a first identifier of a terminal device, and is used to request the second core network element to generate or update a network subscription of the terminal device; and
generating or updating, by the second core network element, the network subscription of the terminal device.

11. The method according to claim 10, wherein the first message further comprises a user group identifier or a network identifier; and
the generating or updating, by the second core network element, the network subscription of the terminal device comprises:
setting, by the second core network element, the user group identifier as an allowed user group identifier in subscription data of the terminal device; or
setting, by the second core network element, a user group identifier corresponding to the network identifier as an allowed user group identifier in subscription data of the terminal device.

12. The method according to claim 10, wherein the generating or updating, by the second core network element, the network subscription of the terminal device comprises:
generating, by the second core network element, an online signup identifier, and adding the online signup identifier to subscription data of the terminal device.

13. The method according to claim 10 or 11, wherein the first message further comprises a credential allocated by the online signup device or an online signup authentication device to the terminal device; and
the generating or updating, by the second core network element, the network subscription of the terminal device further comprises:
adding, by the second core network element, the credential to the subscription data of the terminal device.

14. The method according to any one of claims 10 to 13, wherein the generating or updating, by the second core network element, the network subscription of the terminal device further comprises:
adding, by the second core network element to the subscription data of the terminal device, a data network name DNN and/or network slice selection assistance information NSSAI that are/is available to the terminal device.

15. The method according to claim 14, wherein the method further comprises:
sending, by the second core network element, a signup announcement message to a third core network element, wherein the signup announcement message comprises one or more of the following information added to the subscription data of the terminal device: the data network name DNN or the network slice selection assistance information NSSAI that is available to the terminal device, and the user group identifier.

16. The method according to claim 15, wherein the DNN and/or the NSSAI that are/is comprised in the signup announcement message are/is a DNN and/or NSSAI associated with the user group identifier.

17. An online signup method, comprising:
receiving, by a third core network element, a signup announcement message, wherein the signup announcement message comprises one or more of the following information added to subscription data of a terminal device: a data network name DNN or network slice selection assistance information NSSAI that is available to the terminal device, and a user group identifier;
generating or updating, by the third core network element, a terminal device route selection policy URSP of the terminal device based on the signup announcement message, wherein the URSP comprises one or more of the following information added to the subscription data of the terminal device: the data network name DNN or the network slice selection assistance information NSSAI that is available to the terminal device, and the user group identifier; and
sending, by the third core network element, the URSP to the terminal device.

18. The method according to claim 17, wherein the URSP further comprises an identifier of an application available to the terminal device and an association relationship between the application and one or more of the DNN, the NSSAI, or the user group identifier.

19. An online signup method, comprising:
receiving, by a terminal device, a terminal device route selection policy URSP from a third core network element, wherein the URSP comprises one or more of the following information added to subscription data of the terminal device: a data network name DNN or network slice selection assistance information NSSAI that is available to the terminal device, and a user group identifier; and
accessing, by the terminal device, a network according to the URSP.

20. A communication apparatus, comprising:
a processing module, configured to identify that a terminal device needs to perform online signup, wherein
the processing module is further configured to trigger online signup authentication of the terminal device; and
a transceiver module, configured to: if the online signup authentication of the terminal device succeeds, send a first message to a second core network element, wherein the first message comprises a first identifier of the terminal device, and is used to request the second core network element to generate or update a network subscription of the terminal device.

21. The apparatus according to claim 20, wherein the transceiver module is further configured to receive a second message from the terminal device or an access network device, wherein the second message comprises a user group identifier or a network identifier; and
the processing module is specifically configured to: if determining that the terminal device does not belong to a user group corresponding to the user group identifier, or does not belong to a user group corresponding to the network identifier, identify that the terminal device needs to perform online signup.

22. The apparatus according to claim 20 or 21, wherein the online signup authentication is a process of performing authentication on identity information provided by the terminal device; and
the processing module is specifically configured to:
send an authentication message to an authentication server function network element through the transceiver module, to trigger the authentication server function network element to perform online signup authentication on the terminal device;
send an authentication message to an online signup authentication device through the transceiver module, to trigger the online signup authentication device to perform online signup authentication on the terminal device; or
send first information to the terminal device through the transceiver module, wherein the first information indicates the terminal device to establish a connection to an online signup authentication device; and perform online signup authentication through the online signup authentication device.

23. The apparatus according to claim 22, wherein the first information comprises one or more of an IP address of the online signup authentication device, a data network name DNN, or network slice selection assistance information NSSAI.

24. The apparatus according to any one of claims 20 to 23, wherein the processing module is further configured to:
if the online signup authentication of the terminal device succeeds, generate an online signup identifier for the terminal device, and send the online signup identifier to the terminal device through the transceiver module.

25. The apparatus according to any one of claims 20 to 24, wherein the first message further comprises the user group identifier or the network identifier; and
the first message further indicates the second core network element to set the user group identifier as an allowed user group identifier in subscription data of the terminal device, or to set a user group identifier corresponding to the network identifier as an allowed user group identifier in subscription data of the terminal device.

26. The apparatus according to any one of claims 22 to 25, wherein the transceiver module is further configured to:
send an online signup announcement message to an online signup device, wherein the online signup announcement message comprises a second identifier of the terminal device, and is used to notify the online signup device of an online signup authentication result of the terminal device.

27. The apparatus according to claim 26, wherein the transceiver module is further configured to:
send a third message to the terminal device, wherein the third message comprises an IP address of the online signup device, and the IP address of the online signup device is used by the terminal device to obtain, from the online signup device, a user context generated or updated for the terminal device.

28. The apparatus according to any one of claims 20 to 27, wherein the transceiver module is further configured to:
if the online signup authentication of the terminal device fails, send a fourth message to the terminal device, wherein the fourth message is used to reject a request of the second message.

29. A communication apparatus, comprising:
a transceiver module, configured to receive a first message from a first core network element or an online signup device, wherein the first message comprises a first identifier of a terminal device, and is used to request the second core network element to generate or update a network subscription of the terminal device; and
a processing module, configured to generate or update the network subscription of the terminal device.

30. The apparatus according to claim 29, wherein the first message further comprises a user group identifier or a network identifier; and
the processing module is specifically configured to: set the user group identifier as an allowed user group identifier in subscription data of the terminal device, or set a user group identifier corresponding to the network identifier as an allowed user group identifier in subscription data of the terminal device.

31. The apparatus according to claim 29, wherein the processing module is further specifically configured to: generate an online signup identifier, and add the online signup identifier to subscription data of the terminal device.

32. The apparatus according to claim 29 or 30, wherein the first message further comprises a credential allocated by the online signup device or an online signup authentication device to the terminal device; and
the processing module is further specifically configured to add the credential to the subscription data of the terminal device.

33. The apparatus according to any one of claims 29 to 32, wherein the processing module is further specifically configured to add, to the subscription data of the terminal device, a data network name DNN and/or network slice selection assistance information NSSAI that are/is available to the terminal device.

34. The apparatus according to claim 33, wherein the transceiver module is further configured to send a signup announcement message to a third core network element, wherein the signup announcement message comprises one or more of the following information added to the subscription data of the terminal device:
the data network name DNN or the network slice selection assistance information NSSAI that is available to the terminal device, and the user group identifier.

35. The apparatus according to claim 34, wherein the DNN and/or the NSSAI that are/is comprised in the signup announcement message are/is a DNN and/or NSSAI associated with the user group identifier.

36. A communication apparatus, comprising:
a transceiver module, configured to receive a signup announcement message, wherein the signup announcement message comprises one or more of the following information added to subscription data of a terminal device: a data network name DNN or network slice selection assistance information NSSAI that is available to the terminal device, and a user group identifier; and
a processing module, configured to generate or update a terminal device route selection policy URSP of the terminal device based on the signup announcement message, wherein the URSP comprises one or more of the following information added to the subscription data of the terminal device: the data network name DNN or the network slice selection assistance information NSSAI that is available to the terminal device, and the user group identifier, wherein
the transceiver module is further configured to send the URSP to the terminal device.

37. The apparatus according to claim 36, wherein the URSP further comprises an identifier of an application available to the terminal device and an association relationship between the application and one or more of the DNN, the NSSAI, or the user group identifier.

38. A communication apparatus, comprising:
a transceiver module, configured to receive a terminal device route selection policy URSP from a third core network element, wherein the URSP comprises one or more of the following information added to subscription data of a terminal device: a data network name DNN or network slice selection assistance information NSSAI that is available to the terminal device, and a user group identifier; and
a processing module, configured to access a network according to the URSP.

39. A communication apparatus, wherein the apparatus comprises at least one processor, and the at least one processor is coupled to at least one memory; and
the at least one processor is configured to execute a computer program or instructions stored in the at least one memory, to enable the apparatus to perform the method according to any one of claims 1 to 9, the method according to any one of claims 10 to 16, the method according to claim 17 or 18, or the method according to claim 19.

40. A computer-readable storage medium, configured to store instructions, wherein when the instructions are executed, the method according to any one of claims 1 to 9, the method according to any one of claims 10 to 16, the method according to claim 17 or 18, or the method according to claim 19 is implemented.

41. A communication apparatus, comprising a processor and an interface circuit, wherein
the interface circuit is configured to transmit code instructions to the processor; and
the processor is configured to run the code instructions to perform the method according to any one of claims 1 to 9, the method according to any one of claims 10 to 16, the method according to claim 17 or 18, or the method according to claim 19.

42. A computer program product, wherein when a computer reads and executes the computer program product, the computer is enabled to perform the method according to any one of claims 1 to 9, the method according to any one of claims 10 to 16, the method according to claim 17 or 18, or the method according to claim 19.
